(19) Europäisches Patentamt
European Patent Office
Office européen des brevets

(11) **EP 4 518 188 A1**

(12) **EUROPEAN PATENT APPLICATION**
published in accordance with Art. 153(4) EPC

(43) Date of publication:
**05.03.2025 Bulletin 2025/10**

(21) Application number: 23796782.3

(22) Date of filing: 26.04.2023

(51) International Patent Classification (IPC):
*H04B 7/155* (2006.01)   *H04W 72/23* (2023.01)
*H04W 72/04* (2023.01)   *H04L 5/00* (2006.01)
*H04L 5/14* (2006.01)   *H04B 7/08* (2006.01)
*H04W 52/02* (2009.01)

(52) Cooperative Patent Classification (CPC):
**H04B 7/08; H04B 7/155; H04L 5/00; H04L 5/14;
H04W 52/02; H04W 72/04; H04W 72/23**

(86) International application number:
**PCT/KR2023/005657**

(87) International publication number:
**WO 2023/211139 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 26.04.2022   KR 20220051245
26.04.2022   KR 20220051683

(71) Applicant: **LG Electronics Inc.**
**Yeongdeungpo-gu
Seoul 07336 (KR)**

(72) Inventors:
• **SHIM, Jaenam**
  **Seoul 06772 (KR)**
• **YOU, Hyangsun**
  **Seoul 06772 (KR)**
• **KO, Hyunsoo**
  **Seoul 06772 (KR)**

(74) Representative: **Plasseraud IP**
**104 Rue de Richelieu
CS92104
75080 Paris Cedex 02 (FR)**

(54) **METHOD BY WHICH APPARATUS PERFORMS COMMUNICATION IN WIRELESS COMMUNICATION SYSTEM, AND APPARATUS THEREFOR**

(57)   Disclosed are a method by which an apparatus performs communication in a wireless communication system, according to various embodiments, and the apparatus therefor, wherein a control link to a base station and an access link to a terminal are formed in the apparatus. Disclosed are the method and the apparatus therefor, the method comprising the steps of: receiving radio resource control (RRC) configuration information from the base station through the control link; receiving side control information for controlling the access link from the base station; and forwarding a first signal transmitted from the base station to the terminal through the access link, wherein the apparatus forwards the first signal by applying the RRC configuration information before the side control information, on the basis that the first signal is a cell-specific signal.

FIG. 8

(a)                    (b)

**Description**

**TECHNICAL FIELD**

The present disclosure relates to a method and apparatus for forwarding a signal received from a base station (BS) or a user equipment (UE) by an apparatus in a wireless communication system.

**BACKGROUND**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

**DISCLOSURE**

**TECHNICAL PROBLEM**

An object of present disclosure is to provide a method and apparatus for performing a forwarding operation for a first signal by overriding side control information with RRC configuration information or according to the RRC configuration information even without the side control information, when the first signal requiring forwarding is a cell-specific signal.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

**TECHNICAL SOLUTION**

According to an aspect, a method of performing communication by an apparatus having a control link established with a base station (BS) and an access link established with a user equipment (UE) in a wireless communication system may include receiving radio resource control (RRC) configuration information from the BS via the control link, receiving side control information for controlling the access link from the BS, and forwarding a first signal transmitted from the BS to the UE via the access link. Based on the first signal being a cell-specific signal, the apparatus may forward the first signal by applying the RRC configuration information with priority over the side control information.

Alternatively, the first signal is identified as the cell-specific signal based on time and frequency resources for the cell-specific signal, included in the RRC configuration information.

Alternatively, the RRC configuration information includes information about resources for a synchronization signal/physical broadcast channel (SS/PBCH) block, a control resource set (CORESET), a common search space (CSS), resources for cell-specific paging, or resources for a cell-specific channel state information reference signal (CSI-RS).

Alternatively, based on the first signal being received in the resources for the SS/PBCH block, the CORESET, the resources for the cell-specific paging, or the resources for the cell-specific CSI-RS, the first signal is identified as the cell-specific signal.

Alternatively, based on the first signal being the cell-specific signal, the first signal is forwarded through a downlink transmission beam indicated for the cell-specific signal by the RRC configuration information.

Alternatively, based on the first signal being the cell-specific signal, the first signal is forwarded based on a transmission power indicated for the cell-specific signal by the RRC configuration information.

Alternatively, based on the first signal being the cell-specific signal, even if the side control information indicating to change a first transmission parameter for the cell-specific signal based on the RRC configuration information to a second transmission parameter is received, the apparatus forwards the first signal based on the first transmission parameter.

Alternatively, based on the first signal being the cell-specific signal, the first signal is forwarded based on an amplifying gain indicated for the cell-specific signal by the RRC configuration information.

Alternatively, the first value is a power offset value for increasing or decreasing a transmission power of a DU included in the second IAB.

According to another aspect, an apparatus having a control link established with a BS and an access link established with a UE in a wireless communication system may include a radio frequency (RF) transceiver, and a processor connected to the RF transceiver. The processor may receive RRC configuration information from the BS, receive side control information for controlling the access link from the BS, and forward a first signal transmitted from the BS to the UE via the access link, by controlling the RF transceiver. Based on the first signal being a cell-specific signal, the processor may forward the first signal by applying the RRC configuration information with priority over the side control information.

Alternatively, the apparatus is a network-controlled repeated (NCR).

According to another aspect, a chipset for performing communication for an apparatus having a control link established with a BS and an access link established with a UE in a wireless communication system may include at least one processor, and at least one memory operably connected to the at least one processor, and when executed, causing the at least one processor to perform operations. The operations may include receiving RRC configuration information from the BS, receiving side control information for controlling the access link from the BS, and forwarding a first signal transmitted from the BS to the UE via the access link. Based on the first signal being a cell-specific signal, the at least one processor may forward the first signal by applying the RRC configuration information with priority over the side control information.

According to another aspect, a computer-readable storage medium may include at least one computer program causing at least one processor to perform operations for communication via a control link established with a BS and an access link established with a UE in a wireless communication system. The operations may include receiving RRC configuration information from the BS, receiving side control information for controlling the access link from the BS, and forwarding a first signal transmitted from the BS to the UE via the access link. Based on the first signal being a cell-specific signal, the first signal may be forwarded by applying the RRC configuration information with priority over the side control information.

## ADVANTAGEOUS EFFECTS

According to various embodiments, when a first signal requiring forwarding is a cell-specific signal, a forwarding operation is performed for the first signal by applying RRC configuration information with priority over side control information or according to the RRC configuration information even without the side control information. Accordingly, even though the first signal is forwarded, the transmission and reception degradation of a UE and the signaling overhead of the side control information may be minimized.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 illustrates an example of mapping physical channels in a slot.
FIG. 6 illustrates an exemplary PDCCH transmission/reception process.
FIG. 7 is a diagram illustrating an example of topology in which a network-controlled repeater (NCR) performs transmission and reception between a gNB and a UE.
FIG. 8 is a diagram illustrating a radio frequency (RF) repeater and an NCR.
FIG. 9 is a diagram illustrating a method of performing communication by an apparatus for which a control link with a gNB and an access link with a UE have been established.
FIG. 10 illustrates a communication system applied to the present disclosure.

FIG. 11 illustrates wireless devices applicable to the present disclosure.

FIG. 12 illustrates another example of a wireless device to which the present disclosure.

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

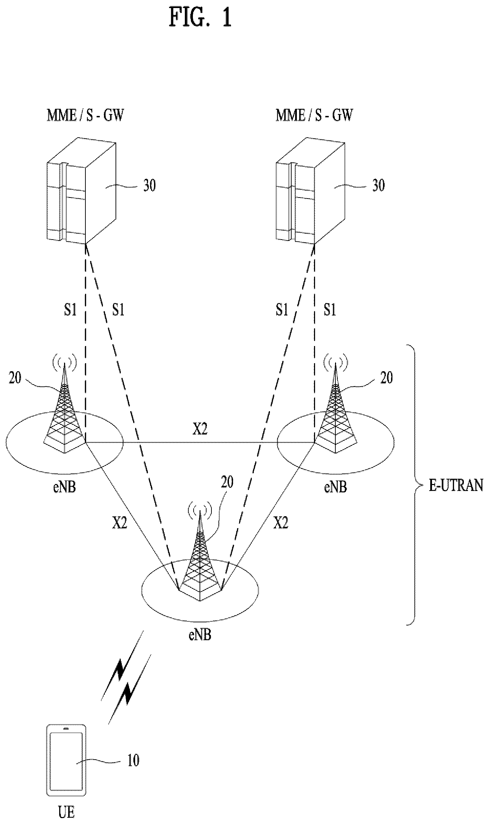

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

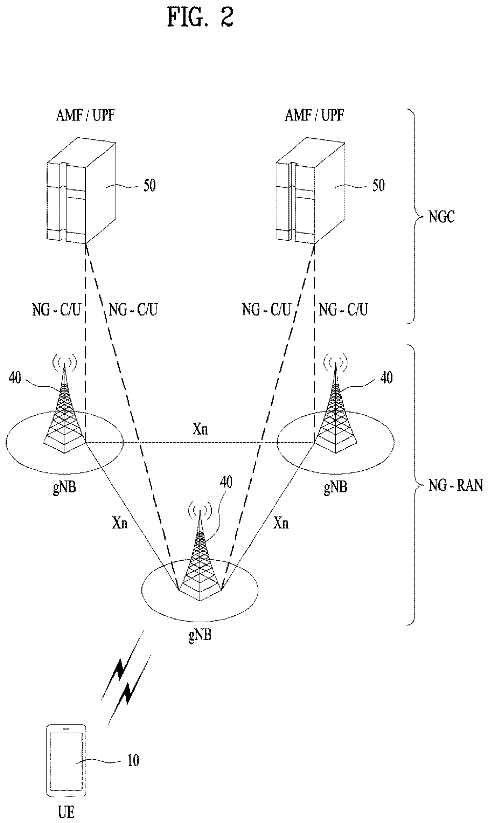

FIG. 2 illustrates the structure of a NR system to which the present disclosure is applicable.

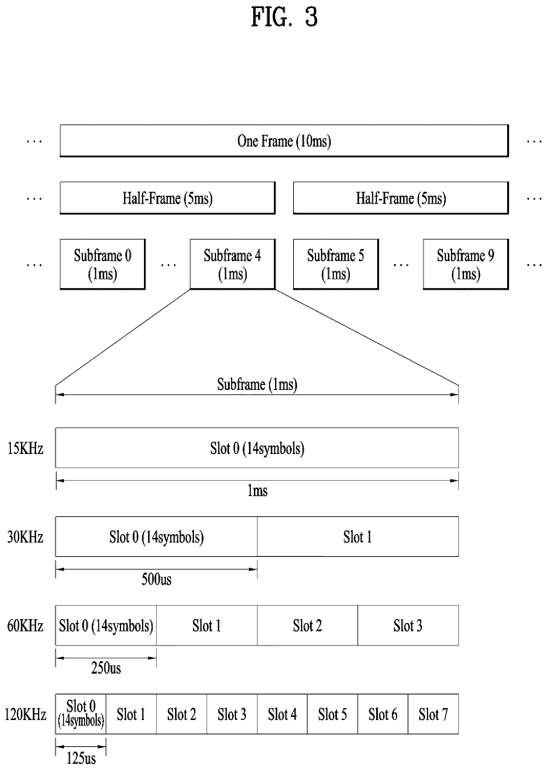

Referring to FIG. 2, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
| --- | --- | --- |
| FR1 | 410MHz - 7125MHz | 15, 30, 60kHz |
| FR2 | 24250MHz - 52600MHz | 60, 120, 240kHz |

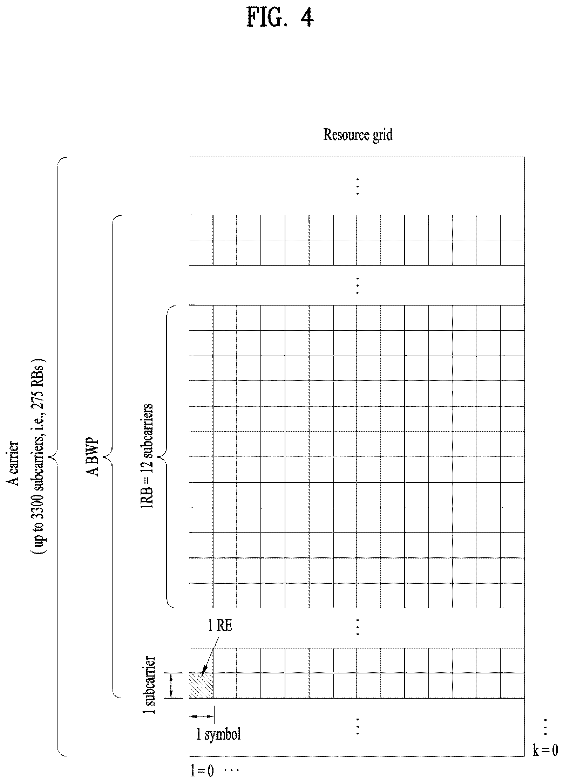

FIG. 4 illustrates the slot structure of a NR frame to which the present disclosure is applicable.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

## Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

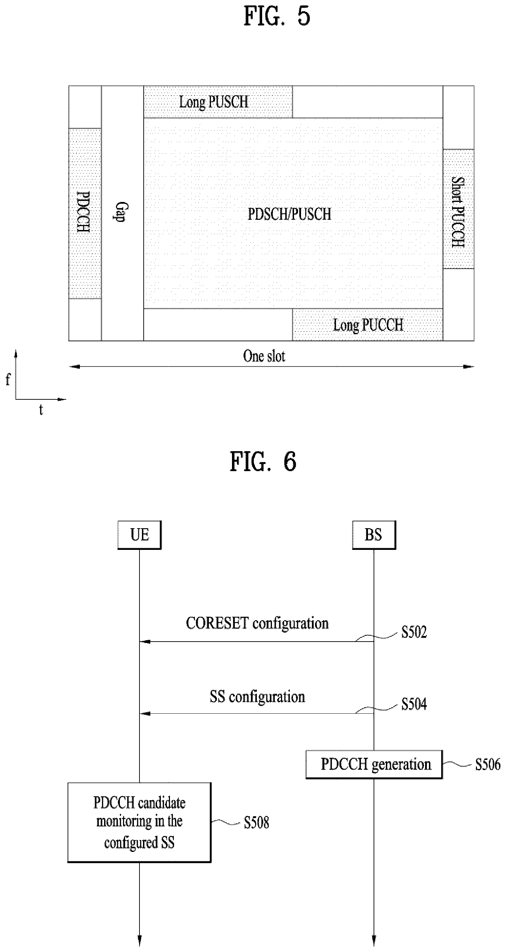

FIG. 5 illustrates an example of mapping physical channels in a slot.

A slot may include a DL control channel, DL or UL data, a UL control channel, etc., all of which are included. For example, the first N symbols in a slot may be used to transmit a DL control channel (hereinafter, referred to as a DL control region), and the last M symbols in the slot may be used to transmit a UL control channel (hereinafter, referred to as a UL control region). N and M are each integers greater than or equal to 0. A resource region (hereinafter, referred to as a data region) between the DL control region and the UL control region may be used for DL data transmission or UL data transmission. A time gap for DL-to-UL or UL-to-DL switching may exist between the control region and the data region. A PDCCH may be transmitted in the DL control region, and a PDSCH may be transmitted in the DL data region. Some symbols at the time of switching from DL to UL in a slot may be used as a time gap.

In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 6 illustrates an exemplary PDCCH transmission/reception process.

Referring to FIG. 6, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. System information (SIB1) broadcast in a cell includes cell-specific PDSCH configuration information, PDSCH-ConfigCommon. PDSCH-Config-Common includes a list (or look-up table) of parameters related to a time-domain resource allocation, pdsch-Time-DomainAllocationList. Each pdsch-TimeDomainAllocationList may include up to 16 entries (or rows) each being joint-encoded {K0, PDSCH mapping type, PDSCH start symbol and length (SLIV)}. Aside from (additionally to) pdsch-TimeDomainAllocationList configured through PDSCH-ConfigCommon, pdsch-TimeDomainAllocationList may be provided through a UE-specific PDSCH configuration, PDSCH-Config. pdsch-TimeDomainAllocationList configured UE-specifically has the same structure as pdsch-TimeDomainAllocationList provided UE-commonly. For K0 and an SLIV of pdsch-TimeDomainAllocationList, the following description is referred to.

Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.

- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicity AndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 5 shows the characteristics of each SS.

[Table 5]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 6 shows DCI formats transmitted on the PDCCH.

[Table 6]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

## RRC signaling for cell-specific signals or channels

Parameters in RRC signaling for a cell-specific signal or channel will be described below in detail (see 3GPP TS 38.331).

First, *TDD-UL-DL-ConfigCommon* may be configuration information that determines/configures a cell-specific UL/DL TDD configuration. *TDD-UL-DL-ConfigCommon* may include the parameters defined in Table 7.

[Table 7]

| **TDD-UL-DL-ConfigCommon field descriptions** |
|---|
| ***referenceSubcarrierSpacing***<br>Reference SCS used to determine the time domain boundaries in the UL-DL pattern which must be common across all subcarrier specifi carriers, i.e., independent of the actual subcarrier spacing using for data transmission. Only the values 15, 30 or 60 kHz (FR1), and 60 or 120 kHz (FR2) are applicable. The network configures a not larger than any SCS of configured BWPs for the serving cell. The network *SL-PreconfigGeneral* configures a not larger than the SCS of (pre-)configured SL BWP.See TS 38.213 [13], clause 11.1. |
| **TDD-UL-DL-Pattern field descriptions** |
| ***dl-UL-TransmissionPeriodicity*** |

(continued)

| **TDD-UL-DL-Pattern field descriptions** |
|---|
| Periodicity of the DL-UL pattern, see TS 38.213 [13], clause 11.1. If the *dl-UL-TransmissionPeriodicity-v1530* is signalled, U shall ignore the *dl-UL-TransmissionPeriodicity* (without suffix). |
| **nrofDownlinkSlots** |
| Number of consecutive full DL slots at the beginning of each DL-UL pattern, see TS 38.213 [13], clause 11.1. In this release the maximum value for this field is 80. |
| **nrofDownlinkSymbols** |
| Number of consecutive DL symbols in the beginning of the slot following the last full DL slot (as derived from *nrof-DownlinkSlots*). The value 0 indicates that there is no partial-downlink slot. (see TS 38.213 [13], clause 11.1). |
| **nrofUplinkSlots** |
| Number of consecutive full UL slots at the end of each DL-UL pattern, see TS 38.213 [13], clause 11.1. In this release, the maximum value for this field is 80. |
| **nrofIJplinkSymbols** |
| Number of consecutive UL symbols in the end of the slot preceding the first full UL slot (as derived from *nrofUplinkSlots*). The value 0 indicates that there is no partial-uplink slot. (see TS 38.213 [13], clause 11.1). |

Next, *BWP-DownlinkCommon* is configuration information used to configure common parameters for a DL BWP. That is, *BWP-DownlinkCommon* may include "cell-specific" parameters. A common parameter for an initial BWP of a PCell may also be provided by system information. For all other serving cells, the network may provide common parameters by dedicated signaling. Specifically, *BWP-DownlinkCommon* may include the parameters defined in Table 8.

[Table 8]

| **BWP-DownlinkCommon field descriptions** |
|---|
| **pdcch-ConfigCommon**<br>Cell specific parameters for the PDCCH of this BWP. This field is absent for a dormant BWP. |
| **pdsch-ConfigCommon**<br>Cell specific parameters for the PDSCH of this BWP. |

Among the parameters, *PDCCH-ConfigCommon* may be used to configure cell-specific PDCCH parameters provided by dedicated signaling as well as an SIB. Referring to Table 9, *PDCCH-ConfigCommon* may include configuration parameters for a cell-specific PDCCH.

[Table 9]

| **PDCCH-ConfigCommon field descriptions** |
|---|
| **commonControlResourceSet**<br>An additional common control resource set which may be configured and used for any common or UE-specific search space. If the network configures this field, it uses a *ControlResourceSetId* other than 0 for this *ControlResourceSet*. The network configures the *commonControlResourceSet* in *SIB1* so that it is contained in the bandwidth of CORESET#0. |
| **commonSearchSpaceList, commnonSearchSpaceListExt**<br>A list of additional common search spaces. If the network configures this field, it uses the *SearchSpaceIds* other than 0. If the field is included, it replaces any previous list, i.e. all the entries of the list are replaced and each of the *SearchSpace* entries is considered to be newly created and the conditions and Need codes for setup of the entry apply. If the network includes *commonSearchSpaceListExt*, it includes the same number of entries, and listed in the same order, as in *commonSearchSpaceList*. |
| **controlResourceSetZero** |

10

(continued)

| **PDCCH-ConfigCommon field descriptions** |
|---|
| Parameters of the common CORESET#O which can be used in any common or UE-specific search spaces. The values are interpreted like the corresponding bits in *MIB pdcch-ConfigSIB1*. Even though this field is only configured in the initial BWP (BWP#0) *controlResourceSetZero* can be used in search spaces configured in other DL BWP(s) than the initial DL BWP if the conditions defined in TS 38.213 [13], clause 10 are satisfied. |
| *firstPDCCH-MonitoringOccasionOfPO* |
| Indicates the first PDCCH monitoring occasion of each PO of the PF on this BWP, see TS 38.304 [20]. |
| *pagingSearchSpace* |
| ID of the Search space for paging (see TS 38.213 [13], clause 10.1). If the field is absent, the UE does not receive paging in this BWP (see TS 38.213 [13], clause 10). |
| *ra-SearchSpace* |
| ID of the Search space for random access procedure (see TS 38.213 [13], clause 10.1). If the field is absent, the UE does not receive RAR in this BWP. This field is mandatory present in the DL BWP(s) if the conditions described in TS 38.321 [3], subclause 5.15 are met. |
| *searchSpaceOtherSystemInformation* |
| ID of the Search space for other system information, i.e., *SIB2* and beyond (see TS 38.213 [13], clause 10.1) If the field is absent, the UE does not receive other system information in this BWP. |
| *searchSpaceSIB1* |
| ID of the search space for *SIB1* message. In the initial DL BWP of the UE's PCell, the network sets this field to 0. If the field is absent, the UE does not receive *SIB1* in this BWP. (see TS 38.213 [13], clause 10) |
| *searchSpaceZero* |
| Parameters of the common SearchSpace#0. The values are interpreted like the corresponding bits in *MIB pdcch-ConfigSIB1*. Even though this field is only configured in the initial BWP (BWP#0), *searchSpaceZero* can be used in search spaces configured in other DL BWP(s) than the initial DL BWP if the conditions described in TS 38.213 [13], clause 10, are satisfied. |

In Table 10, *PDSCH-ConfigCommon* is configuration information used to configure a cell-specific PDSCH.

[Table 10]

| **PDSCH-ConfiqCommon field descriptions** |
|---|
| *pdsch-TimeDomainAllocationList* |
| List of time-domain configurations for timing of DL assignment to DL data (see table 5.1.2.1.1-1 in TS 38.214 [19]). |

In Table 11, a *ServingCellConfigCommon* IE may be used to configure cell-specific parameters for a serving cell of the UE. *ServingCellConfigCommon* may include parameters that the UE generally acquires from an SSB, an MIB, or an SIB during access to a cell in an idle state.

[Table 11]

| **ServingCellConfigCommon field descriptions** |
|---|
| *channelAccessMode* |
| If present, this field indicates which channel access procedures to apply for operation with shared spectrum channel access as defined in TS 37.213 [48]. If the field is configured as "semiStatic", the UE shall apply the channel access procedures for semi-static channel occupancy as described in subclause 4.3 in TS 37.213. If the field is configured as "dynamic", the UE shall apply the channel access procedures in TS 37.213, with the exception of subclause 4.3 of TS 37.213. |
| *dmrs-TypeA-Position* |
| Position of (first) DM-RS for downlink (see TS 38.211 [16]. clause 7.4.1.1.1) and uplink (TS 38.211 [16], clause 6.4.1.1.3). |
| *downlinkConfigCommon* |

(continued)

| ***ServingCellConfigCommon* field descriptions** |
|---|
| The common downlink configuration of the serving cell, including the frequency information configuration and the initial downlink BWP common configuration. The parameters provided herein should match the parameters configured by MIB ar SIB1 (if provided) of the serving cell, with the exception of *controlResourceSetZero* and *searchSpaceZero* which can be configured in *ServingCellConfigCommon* even if MIB indicates that they are absent. |
| ***discoveryBurstWindowLength*** <br> Indicates the window length of the discovery burst in ms (see TS 37.213 [48]). |
| ***longBitmap*** <br> Bitmap when maximum number of SS/PBCH blocks per half frame equals to 64 as defined in TS 38.213 [13], clause 4.1. |
| ***lte-CRS-ToMatchAround*** <br> Parameters to determine an LTE CRS pattern that the UE shall rate match around. |
| ***mediumBitmap*** <br> Bitmap when maximum number of SS/PBCH blocks per half frame equals to 8 as defined in TS 38.213 [13], clause 4.1. |
| ***n-TimingAdvanceOffset*** <br> The N_TA-Offset to be applied for all uplink transmissions on this serving cell. If the field is absent, the UE applies the value defined for the duplex mode and frequency range of this serving cell. See TS 38.133 [14], table 7.1.2-2. |
| ***rateMatchPattemToAddModList*** <br> Resources patterns which the UE should rate match PDSCH around. The UE rate matches around the union of all resource indicated in the rate match patterns. Rate match patterns defined here on cell level apply only to PDSCH of the same numerology (see TS 38.214 [19], clause 5.1.4,1). |
| ***shortBitmap*** <br> Bitmap when maximum number of SS/PBCH blocks per half frame equals to 4 as defined in TS 38.213 [13], clause 4.1. |
| ***ss-PBCH-BlockPower*** <br> Average EPRE of the resources elements that carry secondary synchronization signals in dBm that the NW used for SSB transmission, see TS 38.213 [13], clause 7. |
| ***ssb-periodicityServingCell*** <br> The SSB periodicity in ms for the rate matching purpose. If the field is absent, the UE applies the value ms5. (see TS 38.21 [13], clause 4.1) |
| ***ssb-PositionQCL*** <br> Indicates the QCL relation between SSB positions for this serving cell as specified in TS 38.213 [13], clause 4.1. |
| ***ssb-PositionsinBurst*** <br> For operation in licensed spectrum, indicates the time domain positions of the transmitted SS-blocks in a half frame with SS/PBCH blocks as defined in TS 38.213 [13], clause 4.1. The first/leftmost bit corresponds to SS/PBCH block index 0, the second bit corresponds to SS/PBCH block index 1, and so on. Value 0 in the bitmap indicates that the corresponding SS/PBCH block is not transmitted while value 1 indicates that the corresponding SS/PBCH block is transmitted. The netwo configures the same pattern in this field as in the corresponding field in ServingCellConfigCommonSIB. For operation with shared spectrum channel access, only *mediumBitmap* is used and the UE assumes that one or more SS/PBCH blocks indicated by *ssb-PositionsinBurst* may be transmitted within the discovery burst transmission window and have candidate SS/PBCH blocks indexes corresponding to SS/PBCH block indexes provided by *ssb-PositionsinBurst* (see TS 38.213 [13], clause 4.1). If the k-th bit of *ssb-PositionsinBurst* is set to 1, the UE assumes that one or more SS/PBCH blocks within the discovery burst transmission window with candidate SS/PBCH block indexes corresponding to SS/PBCH block index equal to k - 1 may be transmitted; if the kt-th bit is set to 0, the UE assumes that the corresponding SS/PBCH block(s) are not transmitted. The k-th bit is set to 0, where k > *ssb-PositionQCL* and the number of actually transmitted SS/PBCH blocks is not larger than the number of 1's in the bitmap. The network configures the same pattern in this field as in the corresponding field in *ServingCeliConfigCommonSIB.* |
| ***ssbSubcarrierSpacing*** |

(continued)

| ***ServingCellConfigCommon* field descriptions** |
|---|
| Subcarrier spacing of SSB. Only the values 15 kHz or 30 kHz (FR1), and 120 kHz or 240 kHz (FR2) are applicable. |
| ***supplementaryUplinkConfig***<br>The network configures this field only if *uplinkConfigCommon* is configured. If this field is absent, the UE shall release the *supplementarvUplinkConfig* and the *supplementaryUplink* configured in *ServingCellConfig* of this serving cell, If configured. |
| ***tdd-UL-DL-ConfigurationCommon***<br>A cell-specific TDD UL/DL configuration, see TS 38.213 [13], clause 11.1. |

In Table 12, *ServingCellConfigCommonSIB* may be used to configure cell-specific parameters for the serving cell of the UE in SIB1.

[Table 12]

| ***ServingCellConfigCommonSIB* field descriptions** |
|---|
| ***channelAccessMode***<br>If present, this field indicates which channel access procedures to apply for operation with shared spectrum channel access as defined in TS 37.213 [48]. If the field is configured as "semiStatic", the UE shall apply the channel access procedures for semi-static channel occupancy as described in subclause 4.3 in TS 37.213. If the field is configured as "dynamic"t, the UE shall apply the channel access procedures in TS 37.213, with the exception of subclause 4.3 of TS 37.213. |
| ***discoveryBurstWindowLength***<br>Indicates the window length of the discovery burst in ms (see TS 37.213 [48]). |
| ***groupPresence***<br>This field is present when maximum number of SS/PBCH blocks per half frame equals to 64 as defined in TS 38.213 [13], clause 4.1. The first/leftmost bit corresponds to the SS/PBCH index 0-7, the second bit corresponds to SS/PBCH block 8-15, and so on. Value 0 in the bitmap indicates that the SSBs according to *inOneGroup* are absent. Value 1 indicates that the SS/PBCH blocks are transmitted in accordance with *inOneGroup.* |
| ***inOneGroup***<br>When maximum number of SS/PBCH blocks per half frame equals to 4 as defined in TS 38.213 [13], clause 4.1, only the 4 leftmost bits are valid; the UE ignores the 4 rightmost bits. When maximum number of SS/PBCH blocks per half frame equals to 8 as defined in TS 38.213 [13], clause 4.1, all 8 bits are valid. The first/ leftmost bit corresponds to SS/PBCH block index 0, the second bit corresponds to SS/PBCH block index 1, and so on. When maximum number of SS/PBCH blocks per half frame equals to 64 as defined in TS 38.213 [13], clause 4.1, all 8 bit are valid; The first/ leftmost bit corresponds to the first SS/PBCH block index in the group (i.e., to SSB index 0, 8, and so on); the second bit corresponds to the second SS/PBCH block index in the group (i.e., to SSB index 1, 9, and so on), and so on. Value 0 in the bitmap indicates that the corresponding SS/PBCH block is not transmitted while value 1 indicates that the corresponding SS/PBCH block is transmitted. |
| ***n-TimingAdvanceOffset***<br>The N_TA-Offset to be applied for random access on this serving cell. If the field is absent, the UE applies the value defined for the duplex mode and frequency range of this serving cell. See TS 38.133 [14], table 7.1.2-2. |
| ***ssb-PositionsinBurst***<br>Time domain positions of the transmitted SS-blocks in an SS-burst as defined in TS 38.213 [13], clause 4.1. For operation with shared spectrum channel access, only *inOneGroup* is used and the UE interprets this field same as *mediumBitmap* in *ServingCellConfigCommon.* The UE assumes that a bit at position $k > N_{SSB}^{QCL}$ is 0, where $N_{SSB}^{QCL}$ is obtained from *MIB* as specified in TS 38.213 [13], clause 4.1. |
| ***ss-PBCH-BlockPower***<br>Average EPRE of the resources elements that carry secondary synchronization signals in dBm that the NW used for SSB transmission, see TS 38.213 [13], clause 7. |

In Table 13, BWP-UplinkCommon may be used to configure common parameters for a UL BWP, and may configure parameters for a cell-specific signal.

[Table 13]

| BWP-UplinkCommon field descriptions |
|---|
| **msgA-ConfigCommon**<br>Configuration of the cell specific PRACH and PUSCH resource parameters for transmission of MsgA in 2-step random-dom access type procedure. The NW can configure *msgA-ConfigCommon* only for UL BWPs if the linked DL BWPs (same bwp-Id as UL-BWP) are the initial DL BWPs or DL BWPs containing the SSB associated to the initial BL BWP |
| **pucch-ConfigCommon**<br>Cell specific parameters for the PUCCH of this BWP. |
| *pusch-ConfigCommon*<br>Cell specific parameters for the PUSCH of this BWP. |
| **rach-ConfigCommon**<br>Configuration of cell specific random access parameters which the UE uses for contention based and contention free random access as well as for contention based beam failure recovery in this BWP. The NW configures SSB-based RA (and hence *RACH-ConfigCommon*) only for UL BWPs if the linked DL BWPs (same *bwp-Id* as UL-BWP) are the initial DL BWPs or DL BWPs containing the SSB associated to the initial DL BWP. The network configures *rach-ConfigCommon*, whenever it configures contention free random access (for reconfiauration with sync or for beam failure recovery). |
| **rach-ConfigCommonIAB**<br>Configuration of cell specific random access parameters for the IAB-MT. The IAB specific IAB RACH configuration is used by IAB-MT, if configured. |
| **useInterlacePUCCH-PUSCH**<br>If the field is present, the UE uses uplink frequency domain resource allocation Type 2 for cell-specific PUSCH, e.g., PUSCH scheduled by RAR UL grant (see 38.213 clause 8.3 and 38.214 clause 6.1.2.2) and uses interlaced PUCCH Format 0 and 1 for cell-specific PUCCH (see TS 38.213 [13], clause 9.2.1). |

In Table 14, *initialDownlinkBWP* may be used to configure an initial DL BWP.

[Table 14]

| DownlinkConfigCommonSIB field descriptions |
|---|
| **bcch-Config**<br>The modification period related confiauration. |
| **frequencyInfoDL-SIB**<br>Basic parameters of a downlink carrier and transmission thereon. |
| **initialDownlinkBWP**<br>The initial downlink BWP configuration for a PCell. The network configures the *locationAndBandwidth* so that the initial downlink BWP contains the entire CORESET#0 of this serving cell in the frequency domain. The UE applies the *locationAndBandwidth* upon reception of this field (e.g. to determine the frequency position of signals described in relation to this *locationAndBandwidth*) but it keeps CORESET#0 until after reception of *RRCSetup*/*RRCResume*/*RRCReestablishment*. |
| **nrofPDCCH-MonitoringOccasionPerSSB-InPO**<br>The number of PDCCH monitoring occasions corresponding to an SSB within a Paging Occasion, see TS 38.304 [20], clause 7.1. |
| **pcch-Config** The paging related configuration. |

Further, in Table 15, *PUCCH-ConfigCommon* may be used to configure cell-specific PUCCH parameters.

[Table 15]

| **PUCCH-ConfigCommon field descriptions** |
|---|
| **hoppingId** |
| Cell-specific scrambling ID for group hopping and sequence hopping if enabled, see TS 38.211 [16], clause 6.3.2.2. |
| **p0-nominal** |
| Power control parameter P0 for PUCCH transmissions. Value in dBm. Only even values (step size 2) allowed (see TS 38.213 [13], clause 7.2). |
| **pucch-GroupHopping** |
| Configuration of group- and sequence hopping for all the PUCCH formats 0, 1, 3 and 4. Value *neither* implies neither group or sequence hopping is enabled. Value enable enables group hopping and disables sequence hopping. Value *disable* disables group hopping and enables sequence hopping (see TS 38.211 [16], clause 6.3.2.2). |
| **pucch-ResourceCommon** |
| An entry into a 16-row table where each row configures a set of cell-specific PUCCH resources/parameters. The UE uses those PUCCH resources until it is provided with a dedicated *PUCCH-Config* (e.g. during initial access) on the initial uplink BWP. Once the network provides a dedicated *PUCCH-Config* for that bandwidth part the UE applies that one instead of the one provided in this field (see TS 38.213 [13], clause 9.2). |

In Table 16, *PUSCH-ConfigCommon* may be used to configure cell-specific PUSCH parameters.

[Table 16]

| **PUSCH-ConfigCommon field descriptions** |
|---|
| **groupHoppingEnabledTransformPrecoding** |
| For DMRS transmission with transform precoder, the NW may configure group hopping by this cell-specific parameter, see TS 38.211 [16], clause 6.4.1.1.1.2. |
| **msg3-DeltaPreamble** |
| Power offset between msg3 and RACH preamble transmission. Actual value = field value * 2 [dB] (see TS 38.213 [13], clause 7.1) |
| **p0-NominalWithGrant** |
| P0 value for PUSCH with grant (except msg3). Value in dBm. Only even values (step size 2) allowed (see TS 38.213 [13], clause 7.1) This field is cell specific |
| **pusch-TimeDomainAllocationList** |
| List of time domain allocations for timing of UL assignment to UL data (see TS 38.214 [19], table 6.1.2.1.1-1). |

In Table 17, *RACH-ConfigCommon* may be used to configure cell-specific random access parameters.

[Table 17]

| **RACH-ConfigCommon field descriptions** |
|---|
| **messagePowerOffsetGroupB** |
| Threshold for preamble selection. Value is in dB. Value *minusinfinity* corresponds to -infinity. Value *dB0* corresponds to 0 dB, dB5 corresponds to 5 dB and so on. (see TS 38.321 [3], clause 5.1.2) |
| **msg1-SubcarrierSpacing** |
| Subcarrier spacing of PRACH (see TS 38.211 [16], clause 5.3.2). Only the values 15 or 30 kHz (FR1), and 60 or 120 kHz (FR2) are applicable. If absent, the UE applies the SCS as derived from the *prach-ConfigurationIndex* in *RACH-ConfigGeneric* (see tables Table 6.3.3.1-1, Table 6.3.3.1-2, Table 6.3.3.2-2 and Table 6.3.3.2-3, TS 38.211 [16]). The value also applies to contention free random access *(RACH-ConfigDedicated),* to SI-request and to contention-based beam failure recovery (CB-BFR). But it does not apply for contention free beam failure recovery (CF-BFR) (see *BeamFailureRecoveryConfig*). |
| **msg3-transformPrecoder** |
| Enables the transform precoder for Msg3 transmission according to clause 6.1.3 of TS 38.214 [19]. If the field is absent, the UE disables the transformer precoder (see TS 38.213 [13], clause 8.3). |

(continued)

| ***RACH-ConfigCommon* field descriptions** |
|---|
| ***numberOfRA-PreamblesGroupA*** <br> The number of CB preambles per SSB in group A. This determines implicitly the number of CB preambles per SSB available in group B. (see TS 38.321 [3], clause 5.1.1). The setting should be consistent with the setting of *ssb-per-RACH-OccasionAndCB-PreamblesPerSSB.* |
| ***prach-RootSequenceIndex*** <br> PRACH root sequence index (see TS 38.211 [16], clause 6.3.3.1). The value range depends on whether L=839 or L=139 or L=571 or L=1151. The length of the root sequence corresponding with the index indicated in this IE should be consistent with the one indicated in *prach-ConfigurationIndex* in the *RACH-ConfigDedicated* (if config-ured). If *prach-RootSequenceIndex-r16* is signalled, UE shall ignore the *prach-RootSequenceIndex* (without suffix). |
| ***ra-ContentionResolutionTimer*** <br> The initial value for the contention resolution timer (see TS 38.321 [3], clause 5.1.5). Value *sf8* corresponds to 8 subframes, value *sf16* corresponds to 16 subframes, and so on. |
| ***ra-Msg3SizeGroupA*** <br> Transport Blocks size threshold in bits below which the UE shall use a contention-based RA preamble of group A. (see TS 38.321 [3], clause 5.1.2). |
| ***ra-Prioritization*** <br> Parameters which apply for prioritized random access procedure on any UL BWP of SpCell for specific Access Identities (see TS 38.321 [3], clause 5.1.1a). |
| ***ra-PrioritizationForAI*** <br> Indicates whether the field *ra-Prioritization-r16* applies for Access Identities. The first/leftmost bit corresponds to Access Identity 1, the next bit corresponds to Access Identity 2. Value 1 indicates that the field *ra-Prioritization-r16* applies otherwise the field does not apply (see TS 23.501 [32]). |
| ***rach-ConfigGeneric*** <br> RACH parameters for both regular random access and beam failure recovery. |
| ***restrictedSetConfig*** <br> Configuration of an unrestricted set or one of two types of restricted sets, see TS 38.211 [16], clause 6.3.3.1. |
| ***rsrp- ThresholdSSB*** <br> UE may select the SS block and corresponding PRACH resource for path-loss estimation and (re)transmission based on SS blocks that satisfy the threshold (see TS 38.213 [13]). |

As described above, RRC configuration information, such as *TDD-UL-DL-ConfigCommon, BWP-Downlink-Common, PDCCH-ConfigCommon, PDSCH-ConfigCommon, ServingCellConfigCommonSIB, BWP-UplinkCommon, initialDownlinkBWP, PUCCH-ConfigCommon, PUSCH-ConfigCommon,* and *RACH-ConfigCommon,* may provide configuration information for transmission parameters and transmission resources for a cell-specific signal or channel.

**Network-controlled repeater (NCR) in NR**

Coverage is a fundamental aspect of cellular network deployments. Mobile operators rely on different types of network nodes to offer blanket coverage in their deployments. Deployment of regular full-stack cells is one option but it may not be always possible (e.g., no availability of backhaul) or economically viable. As a result, new types of network nodes have been considered to increase mobile operators' flexibility for their network deployments. For example, Integrated Access and Backhaul (IAB) was introduced in Rel-16 and enhanced in Rel-17 as a new type of network node not requiring a wired backhaul. Another type of network node is the RF repeater which simply amplify-and-forward any signal that they receive. RF repeaters have seen a wide range of deployments in 2G, 3G and 4G to supplement the coverage provided by regular full-stack cells. In Rel-17, RAN4 specified RF and EMC requirements for such RF repeaters for NR targeting both FR1 and FR2. While an RF repeater presents a cost effective means of extending network coverage, it has its limitations. An RF repeater simply does an amplify-and-forward operation without being able to take into account various factors that could improve performance. Such factors may include information on semi-static and/or dynamic downlink/uplink configuration, adaptive transmitter/receiver spatial beamforming, ON-OFF status, etc.

A network-controlled repeater is an enhancement over conventional RF repeaters with the capability to receive and process side control information from the network. Side control information could allow a network-controlled repeater to perform its amplify-and-forward operation in a more efficient manner. Potential benefits could include mitigation of unnecessary noise amplification, transmissions and receptions with better spatial directivity, and simplified network integration.

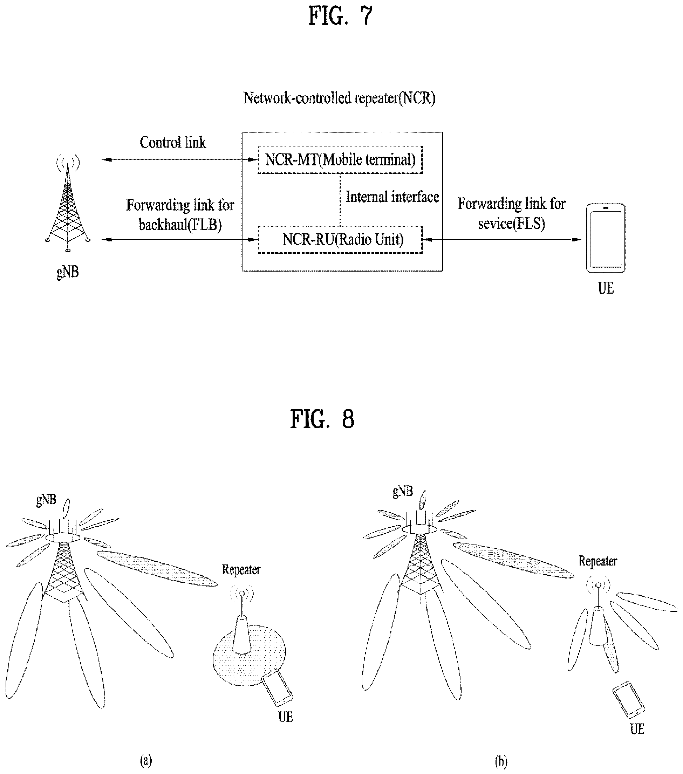

FIG. 7 is a diagram illustrating an example of topology in which a network-controlled repeater (NCR) performs transmission and reception between the gNB and the UE.

Referring to FIG. 7, the NCR may include a radio unit (RU) and a mobile terminal (MT).

The gNB may include a central unit (CU) and/or a distributed unit (DU), and the NCR may be connected to the gNB. In the NCR, the MT may form a control link with the gNB, and the RU may form a forwarding link for backhaul with the gNB and a forwarding link for access with the UE.

The RU of the NCR may be composed of only an RF layer. The RU may receive a signal transmitted by the gNB through the forwarding link at the RF end and may forward the received signal to the UE. As a result, the signal received from the UE may be received by the RF end, and the received signal may be forwarded to the gNB. The RU may only transmit signals between the gNB and the UE, and may not generate signals/channels by itself and transmit the generated signals/channels to the gNB/UE. Alternatively, the RU receives signals/channels from the gNB/UE, but does not detect the received signals/channels. In order to forward the received signal, the RU may control the directions of the transmission (Tx)/reception (Rx) beams, the DL/UL directions, ON/OFF information, Tx power, etc. in the RF end. However, this RU operation cannot be determined by the NCR itself, and can be entirely controlled by the gNB.

The MT of the above NCR may include an RF layer and L1, L2, and/or L3 layers. For example, the MT may include only an RF layer and an L1 layer or may include the L1 and L2 layers. Alternatively, the MT may include an RF layer and L1/L2/L3 layers. The MT may detect/receive a signal/channel transmitted by the gNB and may generate a signal/channel to be transmitted to the gNB. In addition, the MT may receive information (e.g., side control information) necessary to control the operation of the RU from the gNB. Meanwhile, the MT may not perform transmission and reception with the UE.

FIG. 8 is a diagram illustrating the radio frequency (RF) repeater and the NCR.

Referring to FIG. 8(a), the existing RF repeater may perform beamforming to which an omni-direction or fixed direction is applied. In contrast, referring to FIG. 8(b), the NCR can adaptively adjust the transmission/reception beam directions of the NCR according to the UE position and the channel condition of the UE, thereby obtaining a beamforming gain.

In addition, in the case of the existing RF repeater, since the DL/UL directions are not distinguished from each other in the TDD system, transmission and reception in the DL and UL directions are always performed simultaneously. Alternatively, only the fixed TDD configuration is applied to the existing RF repeater, so that switching between the DL direction and UL direction has been performed using a fixed time pattern. In contrast, the NCR may perform DL/UL switching in consideration of a TDD configuration. Through this, switching is being considered. As a result, the NCR can enable adaptive DL/UL operation, may minimize power consumption caused by forwarding unnecessary signals, and may also minimize interference.

In addition, in the case of the existing RF repeater, the power of a signal that is received regardless of whether the gNB and the UE transmit signals is always amplified and transmitted. As a result, unnecessary power consumption and interference to the surroundings are unavoidably increased. In contrast, the NCR performs ON/OFF operations, and when there is no signal to be transmitted to the gNB and UE, the operation of the RU is turned off, so that unnecessary signals are not transmitted.

In addition, in the case of existing RF repeaters, power of a signal received at a fixed ratio is amplified and transmitted. When a signal is transmitted with unnecessarily large power, interference affecting the surroundings may decrease by reducing transmission (Tx) power of the NCR. When a signal is transmitted with low power, transmission (Tx) power of the NCR is increased so that the signal can be stably transmitted to the receiver.

In addition, the existing RF repeater has been operated without recognizing a DL/UL slot boundary. On the other hand, in order for the NCR to adaptively adjust beamforming, ON/OFF, DL/UL directions, transmission power, etc. as described above, the NCR must know transmission/reception (Tx/Rx) boundaries of a downlink (DL). As a result, the RU operation can be applied differently for each unit time (e.g., slot/symbol).

## Side control information for cell-specific channels, signals in NCR

Hereinafter, the operation in the NCR will be assumed for convenience of description. However, the content described below can be applied to devices other than the NCR. In particular, the content described below can be applied for the operation of RIS. To this end, the NCR mentioned in the present disclosure can be replaced with 'RIS' and expanded/interpreted. In this case, the RU may serve to forward signals from the gNB to the UE in RIS and to forward signals from the UE to the gNB in RIS, and the MT may serve to receive side control information required for controlling signal transmission of the RU from the gNB. Meanwhile, the term "network" may hereinafter be interpreted as "gNB" or "CU/DU". In addition, the term "gNB" may hereinafter be interpreted as "network", "CU", or "DU".

In order for the NCR to forward the signal received by the RU, it may be considered that the directions of transmission/reception (Tx/Rx) beams, DL/UL directions, ON/OFF states, transmission (Tx) power, etc. are adjusted at the RF end. However, the RU operation cannot be determined by the NCR itself, and may be entirely controlled by the gNB. To this end, the MT may receive information (i.e., side control information) necessary to control the RU operation from the gNB. This side control information may be transmitted through L1/L2 signaling such as MAC-CE and DCI.

The above-described side control information may include all or part of the following information.

- Beamforming information: Information on the transmission/reception (Tx/Rx) beam direction of the RU

Here, beamforming information may include a beam direction for UL transmission to the gNB, a beam direction for DL reception from the gNB, a beam direction for DL transmission to the UE, and/or a beam direction for UL reception from the UE.

- Timing information to align transmission/reception boundaries of network-controlled repeater (NCR): Information for the RU to align transmission/reception (Tx/Rx) slots symbol boundaries
- Information on UL-DL TDD configuration: information on DL/UL directions of the RU
- ON-OFF information for efficient interference management and improved energy efficiency: Information on ON-OFF operations of the RU
- Power control information for efficient interference management: Information on transmission (Tx) power of the RU, and such information may include UL transmission (Tx) power to the gNB and/or DL transmission (Tx) power to the UE.

The above side control information can be applied differently for each time resource. In this case, it is necessary to indicate different kinds of side control information for each time resource. Specifically, when the side control information is transmitted through MAC-CE and/or DCI, the side control information can be transmitted through different MAC-CEs and/or DCIs for each time resource unit. In this case, it is necessary to transmit side control information for each time resource unit. Considering this situation, when side control information is transmitted once, it may be considered to indicate side control information for multiple time resource units. In this case, there may be a disadvantage in that side control information for multiple time resource units must be determined and configured in advance, but efficient signaling is possible.

Alternatively, the side control information may be indicated (explicitly/implicitly) by a cell-specific configuration. The cell-specific configuration may mean a configuration that is commonly applied to all UEs or a plurality of UEs within a cell. Accordingly, for a signal/channel or a time/frequency domain resource configuration specified by the cell-specific configuration, the UE expects to be configured with the same configuration (for time/frequency resources) always or for at least a certain period of time. In this case, considering a situation where the NCR relays the link between the gNB and the UE, the MT of the NCR may receive the side control information from the gNB. In this case, although the MT may always receive the cell-specific configuration, indicating time/beam direction/Tx power (all the time) may significantly increase signaling overhead. Moreover, the cell-specific configuration should be applied equally for at least a certain period of time. However, the cell-specific configuration may be incorrectly applied or incorrectly changed due to indication or interpretation of incorrect side control information. In this case, the transmission and reception performance of all UEs which are served by the NCR or for which the NCR performs forwarding may be degraded.

Therefore, methods of performing an operation such as forwarding a cell-specific channel/signal and/or a cell-specific time/frequency configuration by an RU in relation to side control information indicated to an NCR during an NCR operation in an NR environment are proposed below to address the above problem.

An RU and an MT included in an NCR are functionally separated. That is, the RU is an entity that amplifies and/or forwards a signal/channel received from a gNB to a UE, and thus does not have which signal/channel it is amplifying and/or forwarding. The MT is an entity that receives side control information for controlling the RU, and exchanges information between the NCR and the gNB. Accordingly, the RU may operate by receiving an indication of a beam direction of an RU to UE link (or a forwarding link or an RU-UE link), whether the RU-UE link is ON/OFF, whether the RU-UE link is DL or UL, DL Tx power of the RU for the RU-UE link, or how much the RU is to amplify a DL signal received from the gNB, for forwarding via the RU-UE link (or a DL amplify gain), based on information indicated to the MT by the gNB. However, when the RU knows resource information about transmission/reception resources for a cell-specific signal/channel among signals/channels that the RU receives from the gNB and forwards to the UE (or among signals/channels that the RU receives from the UE and forwards to the gNB), the RU may perform a forwarding operation for a signal/channel received in the transmission/reception resources for the cell-specific signal/channel even without side control information (or even if the side control information is indicated, ignoring it).

For example, when the RU knows information about time and/or frequency resources in which a specific SS/PBCH block is transmitted and received, the RU may apply a specific beam to a signal/channel received in the time and/or frequency resources, always turn on the RU-UE link, always predict that a DL channel/signal will be received, and assume that a specific Tx power will be applied, even without additional side control information about the time and/or frequency resources. Alternatively, when the RU knows the information about the time and/or frequency resources in which the specific SS/PBCH block is transmitted and received, even if there is additional side control information about the time and/or frequency resources, the RU may ignore the additional side control information, always keep the RU-UE link ON, always predict that a DL channel/signal will be received, and assume that a specific Tx power will be applied.

However, the RU may generally not know which signal/channel it is forwarding. In this case, the RU may determine a configuration for a cell-specific signal/channel based on configuration information (e.g., RRC configuration information) configured for the MT, and identify/determine the cell-specific signal/channel based on the configuration for the cell-specific signal/channel. That is, the RU may determine time/frequency resources in which it forwards the specific signal/channel based on the configuration for the cell-specific signal/channel. The cell-specific signal/channel may refer to a signal/channel commonly applied to all UEs or a plurality of UEs served by the gNB (or ground station). For example, the cell-specific signal/channel may be configured/specified based on all or some of the parameters for the cell-specific signal/channel described in the above-described "RRC signaling for cell-specific signals or channels" (see 3GPP TS 38.331). Since the parameters are transmitted through RRC, it may be considered that the MT receives all or part of RRC configuration information signaled by RRC signaling and applies it to the RU. Alternatively, the MT may receive cell-specific information corresponding to the above-described "RRC signaling for cell-specific signals or channels" separately through a MAC-CE/DCI.

Largely, two situations may be considered in which the RU relays the specific signal/channel. One of them is an RU operation of receiving a specific signal/channel from the gNB and forwarding it to the UE, in resources for relaying a DL link of a UE (section 1), and the other is an RU operation of receiving a specific signal/channel from the UE and forwarding it to the gNB, in resources for relaying a UL link of the UE (section 2).

## 1. RU operation in resources for forwarding specific signal/channel received from gNB to UE

The NCR or the MT may identify/determine a cell-specific configuration for a cell-specific signal/channel based on configuration information configured by RRC/MAC-CE/DCI. In this case, even if the MT or the NCR separately receives side control information for resources amplified/forwarded to the UE from the gNB, it may apply the cell-specific configuration with priority to a forwarding operation of the RU, or may apply the cell-specific configuration to the forwarding operation of the RU, ignoring the separate side control information. In this case, the NCR or the MT may enable the RU to perform a fixed forwarding operation for the cell-specific signal/channel based on the cell-specific configuration. That is, the NCR or the MT may apply the cell-specific configuration with priority over the side control information to the operation of the RU for the received cell-specific signal/channel. Alternatively, upon receipt of the cell-specific configuration while the NCR or the MT controls the RU to perform the forwarding operation for the cell-specific signal/channel according to the side control information, the NCR or the MT may control the RU to perform the forwarding operation based on the cell-specific configuration. Alternatively, the NCR or the MT may expect that the received side control information is not or will not be applied to the forwarding operation of the RU for the cell-specific signal/channel or resources for the cell-specific signal/channel.

Specifically, for at least one of the following cell-specific signals/channels, the NCR or the MT may always apply the cell-specific configuration with priority over the side control information (to the forwarding operation of the RU), or may apply the cell-specific configuration, ignoring the side control information.

-    SS/PBCH block: Slot-based (or symbol-based) time resources and/or RB-based (or RE-based) frequency resources in which an SS/PBCH block is transmitted
-    CORESET (control resource set): All CORESETs or CORESET #0 (CORESET with CORESET ID 0), or slot-based (or symbol-based) time resources and/or RB-based (or RE-based) frequency resources in which a CORESET is transmitted
-    Common search space: All common search spaces or type 0-PDCCH common search space, or slot-based (or symbol-based) time resources and/or RB-based (or RE-based) frequency resources in which a common search space is transmitted
-    Cell-specific paging information: Time resources of a paging frame or paging occasion in which cell-specific paging is transmitted, or slot-based (or symbol-based) time resources and/or RB-based (or RE-based) frequency resources in which paging is transmitted
-    Cell-specific CSI-RS: Slot-based (or symbol-based) time resources and/or RB-based (or RE-based) frequency resources in which a cell-specific CSI-RS is transmitted
-    DL signal/channel included in random access procedure: That is, a DL signal/channel in which an RA response (Msg2) or a contention resolution (Msg 4) for a contention-based RACH is transmitted, or slot-based (or symbol-based) time resources and/or RB-based (or RE-based) frequency resources in which Msg2 and/or Msg4 of the RA procedure is transmitted

For slot-based (or symbol-based) time resources and/or RB-based (or RE-based) frequency resources in which a signal/channel corresponding to DL is transmitted among the above cell-specific signals/channels (and/or cell-specific signals/channels defined or configured in the above-described "RRC signaling for cell-specific signals or channels), a cell-specific configuration may be applied to a forwarding operation of the RU, with priority over side control information or ignoring the side control information according to at least one of the following options (Option 1-1 to Option 1-7).

(1) Option 1-1

The RU may always determine the slot-based (or symbol-based) time resources in which the cell-specific signal/channel is transmitted as DL. Alternatively, the RU may always determine time resources including a slot unit (or symbol unit) in which the cell-specific signal/channel is transmitted as DL, even if the time resources are indicated as UL or flexible by the side control information (through the MT). Alternatively, when time resources including a specific slot/symbol unit are pre-indicated as UL or flexible by the side control information, but is indicated or identified as the time resources in which the cell-specific signal/channel is transmitted, the RU may always determine the time resources as DL.

(2) Option 1-2

The RU may always determine that DL is ON for the slot-based (or symbol-based) time resources in which the cell-specific signal/channel is transmitted, and may determine that a DL reception via the gNB-RU link (of the RU) and a DL transmission via the RU-UE link are instructed to be performed in the time resources. And/or, the RU may always determine that DL is ON for the RB-based or RE-based frequency resources in which the cell-specific signal/channel is transmitted, and thus determine that a DL reception via the gNB-RU link (of the RU) and a DL transmission via the RU-UE link are instructed to be performed in the time resources or frequency resources. DL ON means performing a DL reception via the gNB-RU link and a DL transmission via the RU-UE link. On the contrary, DL OFF means not performing a DL reception via the gNB-RU link and a DL transmission via the RU-UE link. Alternatively, DL OFF means not performing a DL reception via the gNB-RU link or a DL transmission via the RU-UE link. Therefore, the RU may always determine that DL is ON for the slot-based or symbol-based time resources in which the cell-specific signal/channel is transmitted, regardless of the presence or absence of the side control information, and perform a DL reception via the gNB-RU link and a DL transmission via the RU-UE link.

Alternatively, the RU may always determine that UL is OFF for the slot-based (or symbol-based) time resources in which the cell-specific signal/channel is transmitted, and may determine that a UL reception via the UE-RU link and a UL transmission via the RU-gNB link are instructed not to be performed in the time resources. And/or, the RU may always determine that UL is OFF for the RB-based or RE-based frequency resources in which the cell-specific signal/channel is transmitted, and may determine that a UL reception via the UE-RU link and a UL transmission via the RU-gNB link are instructed not to be performed in the frequency resources. UL OFF means not performing a UL reception via the UE-RU link and a UL transmission via the RU-gNB link. On the contrary, UL ON means performing a UL reception via the UE-RU link and a UL transmission via the RU-gNB link. Therefore, the RU may always determine that UL is OFF for the slot-based or symbol-based time resources in which the cell-specific signal/channel is transmitted, regardless of the presence or absence of the side control information, and may not perform a UL reception via the UE-RU link and a UL transmission via the RU-gNB link.

Alternatively, the RU may always determine that UL is OFF and DL is ON for the slot-based or symbol-based time resources in which the cell-specific signal/channel is transmitted, regardless of the presence or absence of the side control information. In this case, the RU may perform a DL reception via the gNB-RU link and a DL transmission via the RU-UE link without performing a UL reception via the UE-RU link and/or a UL transmission via the RU-gNB link.

(3) Option 1-3

The RU may always determine a DL Rx beam (a gNB to RU beam) and a DL Tx beam (an RU to UE beam) for the slot-based (or symbol-based) time resources and/or the RB-based (or RE-based) frequency resources in which the cell-specific signal/channel is transmitted, as a beam corresponding to the cell-specific signal/channel. The beam corresponding to the cell-specific signal/channel may be a beam specified by implementation, a specific beam indicated/configured by the cell-specific configuration, or a beam specified by pre-agreement or pre-negotiation.

(4) Option 1-4

The RU may always determine a DL Tx power for the slot-based (or symbol-based) time resources and/or the RB-based (or RE-based) frequency resources in which the cell-specific signal/channel is transmitted as a specific DL Tx power corresponding to the cell-specific signal/channel. The DL Tx power corresponding to the cell-specific signal/channel may be a DL Tx power specified by implementation, a specific DL Tx power indicated by the cell-specific configuration, or a DL Tx power specified by pre-agreement or pre-negotiation. Alternatively, the RU may determine that a DL Tx power is indicated as fixed for the slot-based (or symbol-based) time resources and/or the RB-based (or RE-based) frequency resources in which the cell-specific signal/channel is transmitted. That is, the RU may not change the DL Tx power for the slot-based (or symbol-based) time resources and/or the RB-based (or RE-based) frequency resources in which the cell-specific signal/channel is transmitted, even if DL Tx power reduction/boosting is indicated by the side control information. The DL Tx power of the RU may be the Tx power of a DL transmitted to the gNB by the RU.

(5) Option 1-5

The RU may always determine a Tx timing for the slot-based (or symbol-based) time resources and/or the RB-based (or RE-based) frequency resources in which the cell-specific signal/channel is transmitted as a specific timing corresponding to the cell-specific signal/channel. The timing corresponding to the cell-specific signal/channel may be a timing specified by implementation, a specific timing indicated by the cell-specific configuration, or a timing specified by pre-agreement or pre-negotiation. Alternatively, the RU may determine that a timing is indicated as fixed for the slot-based (or symbol-based) time resources and/or the RB-based (or RE-based) frequency resources in which the cell-specific signal/channel is transmitted. That is, the RU may not change the timing for the slot-based (or symbol-based) time resources and/or the RB-based (or RE-based) frequency resources in which the cell-specific signal/channel is transmitted, even if a DL Tx timing (or DL Rx timing) change is indicated by the side control information. The specific timing may mean time synchronization between two links, for each of a DL reception via the gNB-RU link and a DL transmission via the RU-UE link, only time synchronization of a link for a DL reception on the gNB-RU link, or only time synchronization of a link for a DL transmission on the RU-UE link.

(6) Option 1-6

The RU may always determine a subcarrier spacing (SCS) and/or BWP for the slot-based (or symbol-based) time resources and/or the RB-based (or RE-based) frequency resources in which the cell-specific signal/channel is transmitted as a specific SCS and/or BWP corresponding to the cell-specific signal/channel. The SCS and/or BWP corresponding to the cell-specific signal/channel may be an SCS and/or BWP specified by implementation, a specific SCS and/or BWP indicated by the cell-specific configuration, or a SCS and/or BWP specified by pre-agreement or pre-negotiation. Alternatively, the RU may determine that an SCS and/or BWP is indicated as fixed for the slot-based (or symbol-based) time resources and/or the RB-based (or RE-based) frequency resources in which the cell-specific signal/channel is transmitted. That is, the RU may not change the SCS and/or BWP for the slot-based (or symbol-based) time resources and/or the RB-based (or RE-based) frequency resources in which the cell-specific signal/channel is transmitted, even if an SCS and/or BWP change is indicated by the side control information.

(7) Option 1-7

The RU may always determine an amplifying gain for the slot-based (or symbol-based) time resources and/or the RB-based (or RE-based) frequency resources in which the cell-specific signal/channel is transmitted as a specific amplifying gain corresponding to the cell-specific signal/channel. The amplifying gain corresponding to this signal/channel may be an amplifying gain specified by implementation, a specific amplifying gain indicated by the cell-specific configuration, or an amplifying gain specified by pre-agreement or pre-negotiation. Alternatively, the RU may determine that an amplifying gain is fixed for the slot-based (or symbol-based) time resources and/or the RB-based (or RE-based) frequency resources in which the cell-specific signal/channel is transmitted. That is, the RU may not change the amplifying gain for the slot-based (or symbol-based) time resources and/or the RB-based (or RE-based) frequency resources in which the cell-specific signal/channel is transmitted, even if DL Tx reduction/boosting is indicated by the side control information or an amplifying gain change is indicated by the side control information. The amplifying gain may refer to the power (or SNR) of a signal transmitted by the RU to the UE relative to the power (or SNR) of a DL reception signal received by the RU from the gNB.

## 2. RU operation in resources in which specific signal/channel received from UE is forwarded to gNB

The MT may identify a cell-specific configuration for a cell-specific signal/channel based on configuration information configured by RRC/MAC-CE/DCI. In this case, even if the MT or the NCR separately receives side control information for resources amplified/forwarded to the UE from the gNB, it may apply the cell-specific configuration with priority to a forwarding operation of the RU, or may apply the cell-specific configuration to the forwarding operation of the RU, ignoring the separate side control information. In this case, the NCR or the MT may enable the RU to perform a fixed forwarding operation for the cell-specific signal/channel based on the cell-specific configuration. That is, the NCR or the MT may apply the cell-specific configuration with priority over the side control information to the operation of the RU for the received cell-specific signal/channel. Alternatively, upon receipt of the cell-specific configuration while the NCR or the MT controls the RU to perform the forwarding operation for the cell-specific signal/channel according to the side control information, the NCR or the MT may control the RU to perform the forwarding operation based on the cell-specific configuration. Alternatively, the NCR or the MT may expect that the received side control information is not or will not be applied to the forwarding operation of the RU for the cell-specific signal/channel or resources for the cell-specific signal/channel.

Specifically, for at least one of the following cell-specific signals/channels, the NCR or the MT may always apply the cell-specific configuration with priority over the side control information (to the forwarding operation of the RU), or may apply the cell-specific configuration, ignoring the side control information.

- UL signals/channels included in a random access procedure

That is, a UL signal/channel in which a PRACH preamble transmission (Msg1) or scheduled transmission (Msg 3) is performed or is expected to be performed in an RACH procedure, slot-based (or symbol-based) time resources and/or RB-based (or RE-based) frequency resources in which the UE is expected to transmit an RACH, an entire slot defined as an RACH slot, or time and/or frequency resources defined as an RACH occasion, and/or slot-based (or symbol-based) time resources and/or RB-based (or RE-based) frequency resources in which the UE is expected to perform contention-based random access (CBRA).

- A UL signal/channel in which the UE is expected to perform a beam failure recovery (BFR) procedure

That is, slot-based (or symbol-based) time resources and/or RB-based (or RE-based) frequency resources that the UE transmits or is expected to transmit in the BFR procedure in which the UE determines DL beam failure and detects a new DL beam.

For slot-based (or symbol-based) time resources and/or RB-based (or RE-based) frequency resources in which a signal/channel corresponding to DL is transmitted among the above cell-specific signals/channels (and/or cell-specific signals/channels defined or configured in the above-described "RRC signaling for cell-specific signals or channels), a cell-specific configuration may be applied to a forwarding operation of the RU, with priority over side control information or ignoring the side control information according to at least one of the following options (Option 2-1 to Option 2-7).

(1) Option 2-1

The RU may always determine the slot-based (or symbol-based) time resources in which the cell-specific signal/channel is transmitted as UL. Alternatively, the RU may always determine time resources including a slot unit (or symbol unit) in which the cell-specific signal/channel is transmitted as UL, even if the time resources are indicated as DL or flexible by the side control information (through the MT). Alternatively, when time resources including a specific slot/symbol unit are pre-indicated as DL or flexible by the side control information, but is indicated or identified as the time resources in which the cell-specific signal/channel is transmitted, the RU may always determine the time resources as UL.

(2) Option 2-2

The RU may always determine that UL is ON for the slot-based (or symbol-based) time resources in which the cell-specific signal/channel is transmitted, and may determine that a UL reception via the RU-UE link (of the RU) and a UL transmission via the gNB-RU link are instructed to be performed in the time resources. And/or, the RU may always determine that UL is ON for the RB-based or RE-based frequency resources in which the cell-specific signal/channel is transmitted, and thus determine that a UL reception via the RU-UE link (of the RU) and a UL transmission via the gNB-RU link are instructed to be performed in the time resources or frequency resources. UL ON means performing a UL reception via the RU-UE link and a UL transmission via the gNB-RU link. On the contrary, UL OFF means not performing a UL reception via the RU-UE link and a UL transmission via the gNB-RU link. Alternatively, UL OFF means not performing a UL reception via the RU-UE link and a UL transmission via the gNB-RU link. Therefore, the RU may always determine that UL is ON for the slot-based or symbol-based time resources in which the cell-specific signal/channel is transmitted, regardless of the presence or absence of the side control information, and perform a UL reception via the RU-UE link and a UL transmission via the gNB-RU link.

Alternatively, the RU may always determine that UL is OFF for the slot-based (or symbol-based) time resources in which the cell-specific signal/channel is transmitted, and may determine that a UL reception via the UE-RU link and a UL transmission via the RU-gNB link are instructed not to be performed in the time resources. And/or, the RU may always determine that UL is OFF for the RB-based or RE-based frequency resources in which the cell-specific signal/channel is transmitted, and may determine that a UL reception via the UE-RU link and a UL transmission via the RU-gNB link are instructed not to be performed in the frequency resources. UL OFF means not performing a UL reception via the UE-RU link and a UL transmission via the RU-gNB link. On the contrary, UL ON means performing a UL reception via the UE-RU link and a UL transmission via the RU-gNB link. Therefore, the RU may always determine that UL is OFF for the slot-based (or symbol-based) time resources in which the cell-specific signal/channel is transmitted, regardless of the presence or absence of the side control information, and may not perform a UL reception via the UE-RU link and a UL transmission via the RU-gNB link.

Alternatively, the RU may always determine that UL is OFF and DL is ON for the slot-based or symbol-based time resources in which the cell-specific signal/channel is transmitted, regardless of the presence or absence of the side control information. In this case, the RU may perform a UL reception via the RU-UE link and a UL transmission via the gNB-RU link without performing a UL reception via the UE-RU link and/or a UL transmission via the RU-gNB link.

(3) Option 2-3

The RU may always determine a UL Rx beam (a UE to RU beam) and a UL Tx beam (an RU to gNB beam) for the slot-based (or symbol-based) time resources and/or the RB-based (or RE-based) frequency resources in which the cell-specific signal/channel is transmitted, as a configured/determined beam for the slot-based (or symbol-based) time resources and/or the RB-based (or RE-based) frequency resources in which the cell-specific signal/channel is transmitted. The beam corresponding to this cell-specific signal/channel may be a beam specified by implementation, a specific beam indicated or configured by the cell-specific configuration, or a beam specified by pre-agreement or pre-negotiation.

(4) Option 2-4

The RU may always determine a UL Tx power for the slot-based (or symbol-based) time resources and/or the RB-based (or RE-based) frequency resources in which the cell-specific signal/channel is transmitted as a specific UL Tx power corresponding to the cell-specific signal/channel. The UL Tx power corresponding to the cell-specific signal/channel may be a UL Tx power specified by implementation, a specific UL Tx power indicated by the cell-specific configuration, or a UL Tx power specified by pre-agreement or pre-negotiation. Alternatively, the RU may determine that a UL Tx power is indicated as fixed for the slot-based (or symbol-based) time resources and/or the RB-based (or RE-based) frequency resources in which the cell-specific signal/channel is transmitted. That is, the RU may not change the UL Tx power for the slot-based (or symbol-based) time resources and/or the RB-based (or RE-based) frequency resources in which the cell-specific signal/channel is transmitted, even if UL Tx power reduction/boosting is indicated by the side control information. The UL Tx power of the RU may be the Tx power of a UL transmitted to the gNB by the RU.

(5) Option 2-5

The RU may always determine a Tx timing for the slot-based (or symbol-based) time resources and/or the RB-based (or RE-based) frequency resources in which the cell-specific signal/channel is transmitted as a specific timing corresponding to the cell-specific signal/channel. The timing corresponding to the cell-specific signal/channel may be a timing specified by implementation, a specific timing indicated by the cell-specific configuration, or a timing specified by pre-agreement or pre-negotiation. Alternatively, the RU may determine that a timing is indicated as fixed for the slot-based (or symbol-based) time resources and/or the RB-based (or RE-based) frequency resources in which the cell-specific signal/channel is transmitted. That is, the RU may not change the timing for the slot-based (or symbol-based) time resources and/or the RB-based (or RE-based) frequency resources in which the cell-specific signal/channel is transmitted, even if a UL Tx timing (or UL Rx timing) change is indicated by the side control information. The specific timing may mean time synchronization between two links, for each of a UL reception via the UE-RU link and a UL transmission via the RU-gNB link, only time synchronization of a link for a UL reception on the RU-RU link, or only time synchronization of a link for a UL transmission on the RU-gNB link.

(6) Option 2-6

The RU may always determine a subcarrier spacing (SCS) and/or BWP for the slot-based (or symbol-based) time resources and/or the RB-based (or RE-based) frequency resources in which the cell-specific signal/channel is transmitted as a specific SCS and/or BWP corresponding to the cell-specific signal/channel. The SCS and/or BWP corresponding to the cell-specific signal/channel may be an SCS and/or BWP specified by implementation, a specific SCS and/or BWP indicated by the cell-specific configuration, or a SCS and/or BWP specified by pre-agreement or pre-negotiation. Alternatively, the RU may determine that an SCS and/or BWP is indicated as fixed for the slot-based (or symbol-based) time resources and/or the RB-based (or RE-based) frequency resources in which the cell-specific signal/channel is transmitted. That is, the RU may not change the SCS and/or BWP for the slot-based (or symbol-based) time resources and/or the RB-based (or RE-based) frequency resources in which the cell-specific signal/channel is transmitted, even if an SCS and/or BWP change is indicated by the side control information.

(7) Option 2-7

The RU may always determine an amplifying gain for the slot-based (or symbol-based) time resources and/or the RB-based (or RE-based) frequency resources in which the cell-specific signal/channel is transmitted as a specific amplifying gain corresponding to the cell-specific signal/channel. The amplifying gain corresponding to this signal/channel may be an amplifying gain specified by implementation, a specific amplifying gain indicated by the cell-specific configuration, or an amplifying gain specified by pre-agreement or pre-negotiation. Alternatively, the RU may determine that an amplifying gain is fixed for the slot-based (or symbol-based) time resources and/or the RB-based (or RE-based) frequency resources in which the cell-specific signal/channel is transmitted. That is, the RU may not change the amplifying gain for the slot-based (or symbol-based) time resources and/or the RB-based (or RE-based) frequency resources in which the cell-specific signal/channel is transmitted, even if UL Tx reduction/boosting is indicated by the side control information or an amplifying gain change is indicated by the side control information. The amplifying gain may refer to the power (or SNR) of a signal transmitted by the RU to the gNB relative to the power (or SNR) of a UL reception signal received by the RU from the UE.

Alternatively, in the case of a time/frequency domain configuration based on the cell-specific configuration, the MT or the NCR may determine an RU operation based on the cell-specific configuration with priority over the side control information, even without identifying whether a signal received by the RU is a cell-specific signal/channel. A detailed description will be given below of a method of determining an RU operation by the MT or NCR based on the cell-specific configuration with priority over the side control information, according to the time/frequency domain configuration based on the cell-specific configuration.

**3. RU operation based on cell-specific time/frequency configuration**

The NCR or the MT may determine a cell-specific time/frequency configuration based on configuration information configured by RRC/MAC-CE/DCI, even if a signal/channel is not a specific signal/channel. The NCR or the MT may perform a fixed RU operation based on the cell-specific time/frequency configuration by overriding or ignoring side control information. That is, it may be considered to apply the cell-specific time/frequency configuration received by the NCR or the MT to the following RU operation by overriding the side control information received by the NCR or the MT. Alternatively, when the NCR or the MT receives the cell-specific time/frequency configuration while performing an RU operation according to the side control information received by the NCR or the MT, the operation based on the side control information may be stopped, and a forwarding operation of the RU may be performed based on the cell-specific time/frequency configuration. Alternatively, it may be expected that the RU operation based on the side control information received by the NCR or the MT will not be applied to resources based on the cell-specific time/frequency configuration received by the MT.

The NCR or the MT (or RU) may apply the following cell-specific time/frequency configuration with priority over the side control information. Alternatively, the NCR or the MT (or RU) may control a forwarding operation of the RU to be performed based on the cell-specific time/frequency configuration, ignoring the side control information according to at least one of the following options.

- DL/UL configuration

That is, DL/UL resources indicated by a cell-specific TDD configuration. In other words, a slot-level/symbol-level DL/UL configuration expected to be configured for and commonly applied to a UE group within a cell or all UEs within the cell.

- BWP configuration

That is, a BWP indicated by a cell-specific configuration, a DL/UL initial BWP or default BWP, or BWP-UplinkCommon/BWP-DownlinkCommon.

In other words, the NCR or the MT (or RU) may perform an RU operation by applying a time/frequency domain configuration expected to be applied cell-specifically (or UE group-specifically) with priority over side control information

(or ignoring the side control information) as in the following options, even if it is not a specific signal/channel in the above-described "RRC signaling for cell-specific signals or channels".

The following description is given based on the assumption that the NCR (or the MT or RU) acquires information about a cell-specific time/frequency domain configuration based on at least one of a DL/UL configuration or a BWP configuration.

(1) Option 3-1

The RU may always determine slot-based (or symbol-based) time resources corresponding to DL in the cell-specific time/frequency domain configuration, as DL. Alternatively, the RU may always determine slot-based (or symbol-based) time resources corresponding to UL in the cell-specific time/frequency domain configuration, as UL. That is, even if time/frequency domain resources determined as UL by the cell-specific time/frequency domain configuration is indicated as DL or flexible by the side control information (via the MT), the RU may always determine the time/frequency domain resources as UL. Alternatively, even if time/frequency domain resources determined as DL by the cell-specific time/-frequency domain configuration is indicated as UL or flexible by the side control information (via the MT), the RU may always determine the time/frequency domain resources as DL.

(2) Option 3-2

The RU may always determine that UL is ON for the slot-based (or symbol-based) time resources corresponding to UL in the cell-specific time/frequency domain configuration, and determine that a UL reception via the UE-RU link and a UL transmission via the RU-gNB link are instructed to be performed in the time resources. And/or, the RU may always determine that UL is ON for the RB-based (or RE-based) frequency resources corresponding to UL in the cell-specific time/frequency domain configuration, and thus determine that a UL reception via the UE-RU link and a UL transmission via the RU-gNB link are instructed to be performed in the frequency resources. UL ON means performing a UL reception via the UE-RU link and a UL transmission via the RU-gNB link. On the contrary, UL OFF means not performing a UL reception via the UE-RU link and a UL transmission via the RU-gNB link. Alternatively, UL OFF means not performing a UL reception via the UE-RU link or a UL transmission via the RU-gNB link. Therefore, the RU may always determine that UL is ON for the slot-based (or symbol-based) time resources corresponding to UL in the cell-specific time/frequency domain configuration, regardless of the presence or absence of the side control information, and perform a UL reception via the UE-RU link and a UL transmission via the RU-gNB link.

Alternatively, the RU may always determine that DL is OFF for the slot-based (or symbol-based) time resources corresponding to UL in the cell-specific time/frequency domain configuration, and determine that a DL reception via the gNB-RU link and a DL transmission via the RU-UE link are instructed not to be performed in the time resources. And/or, the RU may always determine that DL is OFF for the RB-based (or RE-based) frequency resources corresponding to UL in the cell-specific time/frequency domain configuration, and determine that a DL reception via the gNB-RU link and a DL transmission via the RU-UE link are instructed not to be performed in the frequency resources. DL OFF means not performing a DL reception via the gNB-RU link and a DL transmission via the RU-UE link. On the contrary, DL ON means performing a DL reception via the gNB-RU link and a DL transmission via the RU-UE link. Therefore, the RU may always determine that DL is OFF for the slot-based (or symbol-based) time resources corresponding to UL in the cell-specific time/frequency domain configuration, and may not perform a DL reception via the gNB-RU link and/or a DL transmission via the RU-UE link.

Alternatively, the RU may always determine that DL is OFF and UL is ON for the slot-based (or symbol-based) time resources corresponding to UL in the cell-specific time/frequency domain configuration, regardless of the presence or absence of the side control information. In this case, the RU may perform a UL reception via the UE-RU link and/or a UL transmission via the RU-gNB link without performing a DL reception via the gNB-RU link and/or a DL transmission via the RU-UE link.

Further, the RU may always determine that DL is ON for the slot-based (or symbol-based) time resources corresponding to DL in the cell-specific time/frequency domain configuration. In this case, the RU may determine that a DL reception via the gNB-RU link and a DL transmission via the RU-UE link are instructed to be performed. And/or, the RU may always determine that DL is ON for the RB-based (or RE-based) frequency resources corresponding to DL in the cell-specific time/frequency domain configuration, and determine that a DL reception via the gNB-RU link and a DL transmission via the RU-UE link are instructed to be performed in the frequency resources. DL ON means performing a DL reception via the gNB-RU link and a DL transmission via the RU-UE link. On the contrary, DL OFF means not performing a DL reception via the gNB-RU link and a DL transmission via the RU-UE link. Therefore, the RU may always determine that DL is ON for the slot-based (or symbol-based) time resources corresponding to DL in the cell-specific time/frequency domain configuration, regardless of the presence or absence of the side control information. In this case, the RU may perform a DL reception via the gNB-RU link and a DL transmission via the RU-UE link.

Alternatively, the RU may always determine that UL is OFF for the slot-based (or symbol-based) time resources corresponding to DL in the cell-specific time/frequency domain configuration, and determine that a UL reception via the UE-RU link and a UL transmission via the RU-gNB link are instructed not to be performed in the time resources. And/or, the RU may always determine that UL is OFF for the RB-based (or RE-based) frequency resources corresponding to DL in the cell-specific time/frequency domain configuration, and determine that a UL reception via the UE-RU link and a UL transmission via the RU-gNB link are instructed not to be performed in the frequency resources. UL OFF means not performing a UL reception via the UE-RU link and a UL transmission via the RU-gNB link. Alternatively, UL OFF means not performing a UL reception via the UE-RU link and a UL transmission via the RU-gNB link. On the contrary, UL ON means performing a UL reception via the UE-RU link and a UL transmission via the RU-gNB link. Therefore, the RU may always determine that UL is OFF for the slot-based (or symbol-based) time resources corresponding to DL in the cell-specific time/frequency domain configuration, regardless of the presence or absence of the side control information, and may not perform a UL reception via the UE-RU link and/or a UL transmission via the RU-gNB link. Alternatively, the RU may always determine that UL is OFF and DL is ON for the slot-based (or symbol-based) time resources corresponding to DL in the cell-specific time/frequency domain configuration, regardless of the presence or absence of the side control information, and perform a DL reception via the gNB-RU link and a DL transmission via the RU-UE link without performing a UL reception via the UE-RU link and/or a UL transmission via the RU-gNB link.

(3) Option 3-3

The RU may always determine a UL Tx power for the slot-based (or symbol-based) time resources and/or the RB-based (or RE-based) frequency resources corresponding to UL in the cell-specific time/frequency domain configuration as a specific UL Tx power corresponding to the cell-specific time/frequency domain configuration. The UL Tx power corresponding to this time/frequency domain configuration may be a UL Tx power specified by implementation, a specific UL Tx power indicated/configured in relation to the time/frequency domain configuration, or a UL Tx power specified by pre-agreement or pre-negotiation. Alternatively, the RU may determine that a UL Tx power is fixed for the slot-based (or symbol-based) time resources and/or the RB-based (or RE-based) frequency resources corresponding to UL in the cell-specific time/frequency domain configuration. That is, the RU may not change the UL Tx power for the slot-based (or symbol-based) time resources and/or the RB-based (or RE-based) frequency resources corresponding to UL in the cell-specific time/frequency domain configuration, even if UL Tx power reduction/boosting is indicated by the side control information. The UL Tx power of the RU may be the Tx power of a UL transmitted to the gNB by the RU.
Further, the RU may always determine a DL Tx power for the slot-based (or symbol-based) time resources and/or the RB-based (or RE-based) frequency resources corresponding to DL in the cell-specific time/frequency domain configuration as a specific DL Tx power corresponding to the cell-specific time/frequency domain configuration. The DL Tx power corresponding to this time/frequency domain configuration may be a DL Tx power specified by implementation, a specific DL Tx power indicated/configured in relation to the time/frequency domain configuration, or a DL Tx power specified by pre-agreement or pre-negotiation. Alternatively, the RU may determine that a DL Tx power is fixed for the slot-based (or symbol-based) time resources and/or the RB-based (or RE-based) frequency resources corresponding to DL in the cell-specific time/frequency domain configuration. That is, the RU may not change the DL Tx power for the slot-based (or symbol-based) time resources and/or the RB-based (or RE-based) frequency resources corresponding to DL in the cell-specific time/frequency domain configuration, even if DL Tx power reduction/boosting is indicated by the side control information.

(4) Option 3-4

The RU may always determine an SCS and/or BWP for the slot-based (or symbol-based) time resources and/or the RB-based (or RE-based) frequency resources corresponding to the cell-specific time/frequency domain configuration as a specific SCS and/or BWP corresponding to the cell-specific time/frequency domain configuration. The SCS and/or BWP corresponding to the cell-specific time/frequency domain configuration may be an SCS and/or BWP specified by implementation, a specific SCS and/or BWP indicated/configured in relation to the time/frequency domain configuration, or a SCS and/or BWP specified by pre-agreement or pre-negotiation. Alternatively, the RU may determine that an SCS and/or BWP is fixed for the slot-based (or symbol-based) time resources and/or the RB-based (or RE-based) frequency resources corresponding to the cell-specific time/frequency domain configuration. That is, the RU may not change the SCS and/or BWP for the slot-based (or symbol-based) time resources and/or the RB-based (or RE-based) frequency resources corresponding to the cell-specific time/frequency domain configuration, even if an SCS and/or BWP change is indicated by the side control information.

(5) Option 3-5

The RU may always determine an amplifying gain for the slot-based (or symbol-based) time resources and/or the RB-based (or RE-based) frequency resources corresponding to the cell-specific time/frequency domain configuration as a specific amplifying gain corresponding to the cell-specific time/frequency domain configuration. The amplifying gain corresponding to this time/frequency domain configuration may be an amplifying gain specified by implementation, a specific amplifying gain indicated/configured in relation to the cell-specific time/frequency domain configuration, or an amplifying gain specified by pre-agreement or pre-negotiation. Alternatively, the RU may determine that an amplifying gain is fixed for the slot-based (or symbol-based) time resources and/or the RB-based (or RE-based) frequency resources corresponding to the cell-specific time/frequency domain configuration. That is, the RU may not change the amplifying gain for the slot-based (or symbol-based) time resources and/or the RB-based (or RE-based) frequency resources corresponding to the cell-specific time/frequency domain configuration, even if an amplifying gain change is indicated by the side control information. The amplifying gain may refer to the power (or SNR) of a signal transmitted by the RU to the gNB relative to the power (or SNR) of a UL reception signal received by the RU from the UE. Further, the RU may not change the amplifying gain for the slot-based (or symbol-based) time resources and/or the RB-based (or RE-based) frequency resources corresponding to the cell-specific time/frequency domain configuration, even if an amplifying gain change is indicated by the side control information. The amplifying gain may refer to the power (or SNR) of a signal transmitted by the RU to the UE relative to the power (or SNR) of a DL reception signal received by the RU from the gNB.

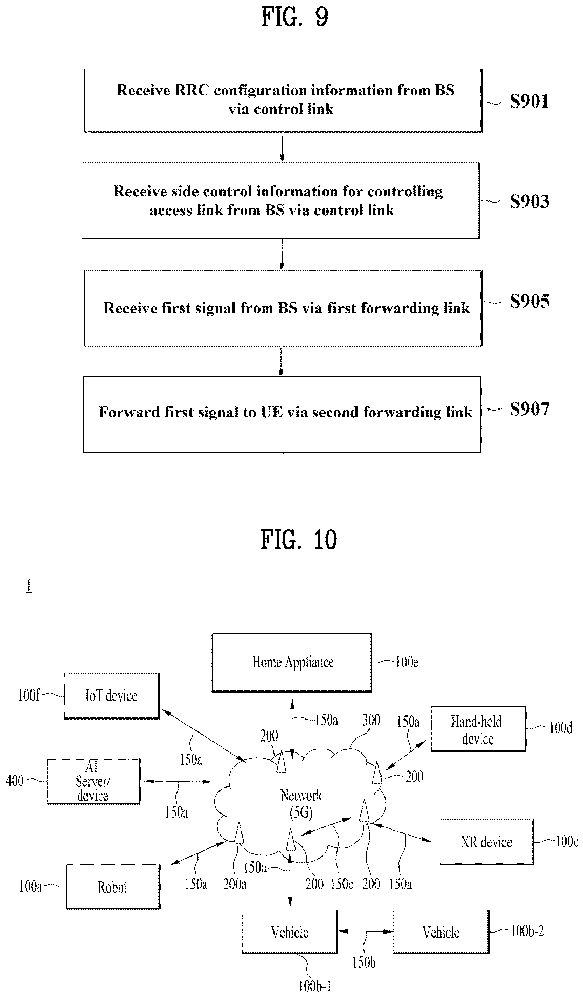

FIG. 9 is a diagram illustrating a method of performing communication by an apparatus having a control link established with a BS and an access link established with a UE.

Referring to FIG. 9, the apparatus may receive RRC configuration information from the BS via the control link (S901). The apparatus may be an NCR or a reconfigurable intelligent surface (RIS). When the apparatus is an NCR, the apparatus may have the control link established between the BS and an MT, a first forwarding link established between the BS and an RU, and a second forwarding link established as the access link between the UE and the RU.

The RRC configuration information may include configuration information for a cell-specific signal/channel. For example, the RRC configuration information may include configuration information for resources for an SS/PBCH block, a CORESET, a CCS, resources for cell-specific paging, and/or resources for a cell-specific CSI. Alternatively, the RRC configuration information may further include configuration information for resources related to a DL signal (Msg2 or Msg4) related to an RACH procedure. Further, the RRC configuration information may include configuration information for cell-specific signals/channels related to the above-described "RRC signaling for cell-specific signals or channels".

As described above, the apparatus or the RU included in the apparatus may identify/determine whether a first signal to be received via the first forwarding link is a cell-specific signal based on the RRC configuration information. For example, when the first signal is received in the resources for the SS/PBCH block, the CORESET, the resources for the CSS, the resources for the cell-specific paging, or the resources for the cell-specific CSI, the apparatus may identify or recognize that the first signal is a cell-specific signal. That is, the apparatus or the RU may identify the type of a signal that it will forward, based on the RRC configuration information.

Subsequently, the apparatus may receive side control information for controlling the access link from the BS (S903). As described above, the side control information may include control information for controlling an operation of the RU included in the apparatus and control information for controlling the access link established between the RU and the UE. The apparatus may receive the side control information via the control link.

The apparatus may then receive the first signal from the BS via the first forwarding link (S905). The first signal received via the first forwarding link is a signal to be forwarded via the second forwarding link, and the apparatus may forward or transmit the first signal to the UE by amplifying its Tx power without decoding the first signal (S907).

Alternatively, when identifying the first signal as a cell-specific signal, the apparatus may perform a forwarding operation for the first signal by applying the RRC configuration information with priority over the side control information. For example, when receiving the first signal in the resources for the SS/PBCH configured by the RRC configuration information, the apparatus may identify the first signal as a cell-specific signal. In this case, the apparatus may perform the forwarding operation for the first signal based on configuration information configured/indicated for the SS/PBCH in the RRC configuration information, not based on the side control information. For example, as described in Option 1-1 to Option 1-7 in Section 1, the apparatus may determine/configure Tx parameters related to forwarding of the first signal to correspond to a DL Tx beam, Tx power, amplifying gain, and/or Tx timing indicated for the SS/PBCH. Alternatively, when the first signal is received in the resources for the CORESET configured by the RRC configuration information, the apparatus may determine Tx parameters for forwarding of the first signal based on configuration information configured/indicated for the CORESET in the RRC configuration information, not based on the side control information. Alternatively, when the first signal is received in the resources for the CSS configured by the RRC configuration information, the apparatus may determine Tx parameters for forwarding of the first signal based on configuration information configured/indicated for the CSS in the RRC configuration information, not based on the side control information. Alternatively, when the first signal is received in the resources for the cell-specific paging configured by the RRC configuration information, the apparatus may determine Tx parameters for forwarding of the first signal based on configuration information configured/indicated for the cell-specific paging in the RRC configuration information, not based on the side control information. Alternatively, when the first signal is received in the resources for the cell-specific CSI-RS configured by the RRC configuration information, the apparatus may determine Tx parameters for forwarding of the first signal based on configuration information configured/indicated for the cell-specific CSI-RS in the RRC configuration information, not based on the side control information.

Alternatively, when identifying the first signal as a cell-specific signal, the apparatus may ignore a change indication of the side control signal, even if it receives the side control signal that changes a Tx parameter or resource configuration which is based on the RRC configuration information for the cell-specific signal. For example, even if the apparatus receives the side control signal requesting a change from a first Tx parameter based on the RRC configuration information to a second Tx parameter for the cell-specific signal, the apparatus may forward the first signal based on the first Tx parameter. Alternatively, even if the apparatus receives the side control signal requesting boosting or reduction of a first Tx power for the cell-specific signal based on the RRC configuration information, the apparatus may forward the first signal without changing the first Tx power to be boosted or reduced.

That is, as described above, when the first signal is identified as a cell-specific signal, the first apparatus may determine/configure Tx parameters for the second forwarding link or Tx parameters for forwarding of the first signal by applying the RRC configuration information with priority over the side control information. For example, even if the first apparatus receives the side control information indicating to change a Tx power for forwarding of the first signal, the first apparatus may forward the first signal according to a Tx power fixed to a Tx power based on the RRC configuration information. That is, the first apparatus may ignore the indication of the side control information in forwarding the first signal which is a cell-specific signal.

As such, when the first signal is a cell-specific signal, the apparatus may perform the forwarding operation for the first signal based on the RRC configuration information, even without separately receiving the side control information, thereby minimizing the signaling overhead of the side control signal related to forwarding of the first signal. Further, even if the apparatus receives the side control information, the apparatus may perform the forwarding operation for the cell-specific signal by applying the RRC configuration information with priority, thereby preventing wrong application or changing of Tx parameters for forwarding of a cell-specific signal important to the UE. Alternatively, the degradation of reception (or transmission) performance of the cell-specific signal for all UEs to which the first signal is forwarded may be minimized by preventing wrong application or changing of Tx parameters for forwarding of a cell-specific signal important to the UE.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 10 illustrates a communication system applied to the present disclosure.

Referring to FIG. 10, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g.,

NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Examples of wireless devices to which the present disclosure is applied**

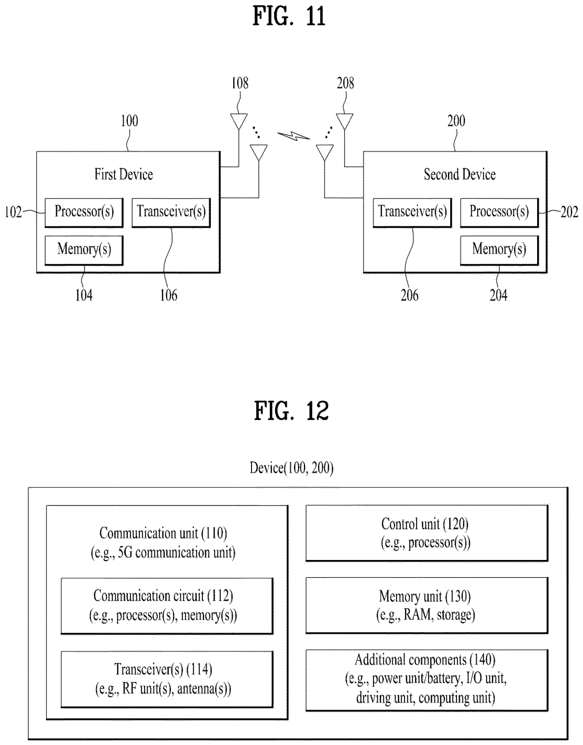

FIG. 11 illustrates a wireless device applicable to the present disclosure.

Referring to FIG. 11, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 10.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to an example, the first wireless device 100 or apparatus may include the processor 102 and the memory 104 connected to the RF transceiver. The memory 104 may include at least one program which may perform operations related to the embodiments described with reference to FIGS. 7 to 9.

Specifically, the processor 102 may, receive RRC configuration information from a BS, receive side control information for controlling an access link from the BS, and forward a first signal transmitted from the BS to a UE via the access link by controlling the RF transceiver, and based on the first signal being a cell-specific signal, the processor may forward the first signal by applying the RRC configuration information with priority over the side control information.

Alternatively, a chipset including the processor 102 and the memory 104 may be configured. In this case, the chipset may include at least one processor and at least one memory operably connected to the at least one processor and which, when executed, causes the at least one processor to perform operations. The operations may include receiving RRC configuration information from a BS, receiving side control information for controlling an access link from the BS, and forwarding a first signal transmitted from the BS to a UE via the access link. Based on the first signal being a cell-specific signal, the at least one processor may forward the first signal by applying the RRC configuration information with priority over the side control information. Further, the at least one processor may perform operations for the embodiments described with reference to FIGS. 7 to 9 based on a program included in the memory.

Alternatively, a computer-readable storage medium may be provided that includes at least one computer program causing at least one processor to perform operations. The operations may include receiving RRC configuration information from a BS, receiving side control information for controlling an access link from the BS, and forwarding a first signal transmitted from the BS to a UE via the access link. Based on the first signal being a cell-specific signal, the first signal may be forwarded by applying the RRC configuration information with priority over the side control information. Further, the computer program may include programs that may perform operations for the embodiments described with reference to FIGS. 7 to 9.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Examples of application of wireless devices to which the present disclosure is applied**

FIG. 12 illustrates another example of a wireless device applied to the present disclosure.

Referring to FIG. 12, wireless devices 100 and 200 may correspond to the wireless devices 100 and 200 of FIG. 11 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 11. For example, the transceiver(s) 114 may include the one or more transceivers 106 and 206 and/or the one or more antennas 108 and 208 of FIG. 11. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 10), the vehicles (100b-1 and 100b-2 of FIG. 10), the XR device (100c of FIG. 10), the handheld device (100d of FIG. 10), the home appliance (100e of FIG. 10), the IoT device (100f of FIG. 10), a digital broadcast terminal, a hologram device, a public safety device, an MTC device, a medicine device, a fintech device (or a finance device), a security device, a climate/environment device, the AI server/device (400 of FIG. 10), the BSs (200 of FIG. 10), a network node, etc. The wireless device may be used in a mobile or fixed place according to a use-example/service.

In FIG. 12, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. In another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

**INDUSTRIAL APPLICABILITY**

The above-described embodiments of the present disclosure are applicable to various mobile communication systems.

**Claims**

1. A method of performing communication by an apparatus having a control link established with a base station (BS) and an access link established with a user equipment (UE) in a wireless communication system, the method comprising:

   receiving radio resource control (RRC) configuration information from the BS via the control link;
   receiving side control information for controlling the access link from the BS; and
   forwarding a first signal transmitted from the BS to the UE via the access link,
   wherein based on the first signal being a cell-specific signal, the apparatus forwards the first signal by applying the RRC configuration information with priority over the side control information.

2. The method of claim 1, wherein the first signal is identified as the cell-specific signal based on time and frequency resources for the cell-specific signal, included in the RRC configuration information.

3. The method of claim 1, wherein the RRC configuration information includes information about resources for a synchronization signal/physical broadcast channel (SS/PBCH) block, a control resource set (CORESET), a common search space (CSS), resources for cell-specific paging, or resources for a cell-specific channel state information reference signal (CSI-RS).

4. The method of claim 3, wherein based on the first signal being received in the resources for the SS/PBCH block, the CORESET, the resources for the cell-specific paging, the resources for the cell-specific paging, or the resources for the cell-specific CSI-RS, the first signal is identified as the cell-specific signal.

5. The method of claim 1, wherein based on the first signal being the cell-specific signal, the first signal is forwarded through a downlink transmission beam indicated for the cell-specific signal by the RRC configuration information.

6. The method of claim 1, wherein based on the first signal being the cell-specific signal, the first signal is forwarded based on a transmission power indicated for the cell-specific signal by the RRC configuration information.

7. The method of claim 1, wherein based on the first signal being the cell-specific signal, even if the side control information indicating to change a first transmission parameter for the cell-specific signal based on the RRC configuration information to a second transmission parameter is received, the apparatus forwards the first signal based on the first transmission parameter.

8. The method of claim 1, wherein based on the first signal being the cell-specific signal, the first signal is forwarded based on an amplifying gain indicated for the cell-specific signal by the RRC configuration information.

9. An apparatus having a control link established with a base station (BS) and an access link established with a user equipment (UE) in a wireless communication system, the apparatus comprising:

   a radio frequency (RF) transceiver; and
   a processor connected to the RF transceiver,
   wherein the processor receives radio resource control (RRC) configuration information from the BS, receives side control information for controlling the access link from the BS, and forwarding a first signal transmitted from the BS to the UE via the access link, by controlling the RF transceiver, and
   wherein based on the first signal being a cell-specific signal, the processor forwards the first signal by applying the RRC configuration information with priority over the side control information.

10. The apparatus of claim 9, wherein the first signal is identified as the cell-specific signal based on time and frequency resources for the cell-specific signal, included in the RRC configuration information.

11. The apparatus of claim 9, wherein the RRC configuration information includes information about resources for a synchronization signal/physical broadcast channel (SS/PBCH) block, a control resource set (CORESET), a common search space (CSS), resources for cell-specific paging, or resources for a cell-specific channel state information reference signal (CSI-RS).

12. The apparatus of claim 9, wherein based on the first signal being the cell-specific signal, the first signal is forwarded through a downlink transmission beam indicated for the cell-specific signal by the RRC configuration information.

13. The apparatus of claim 9, wherein the apparatus is a network-controlled repeated (NCR).

14. A chipset for performing communication for an apparatus having a control link established with a base station (BS) and an access link established with a user equipment (UE) in a wireless communication system, the chipset comprising:

   at least one processor; and
   at least one memory operably connected to the at least one processor, and when executed, causing the at least one processor to perform operations,
   wherein the operations include receiving radio resource control (RRC) configuration information from the BS, receiving side control information for controlling the access link from the BS, and forwarding a first signal transmitted from the BS to the UE via the access link, and
   wherein based on the first signal being a cell-specific signal, the at least one processor forwards the first signal by applying the RRC configuration information with priority over the side control information.

**15.** A computer-readable storage medium including at least one computer program causing at least one processor to perform operations for communication via a control link established with a base station (BS) and an access link established with a user equipment (UE) in a wireless communication system,

wherein the operations include receiving radio resource control (RRC) configuration information from the BS, receiving side control information for controlling the access link from the BS, and forwarding a first signal transmitted from the BS to the UE via the access link, and

wherein based on the first signal being a cell-specific signal, the first signal is forwarded by applying the RRC configuration information with priority over the side control information.

# FIG. 1

# FIG. 2

# FIG. 3

One Frame (10ms)

Half-Frame (5ms)    Half-Frame (5ms)

Subframe 0 (1ms) ... Subframe 4 (1ms)   Subframe 5 (1ms) ... Subframe 9 (1ms)

Subframe (1ms)

15KHz   Slot 0 (14symbols)

1ms

30KHz   Slot 0 (14symbols) | Slot 1

500us

60KHz   Slot 0 (14symbols) | Slot 1 | Slot 2 | Slot 3

250us

120KHz   Slot 0 (14symbols) | Slot 1 | Slot 2 | Slot 3 | Slot 4 | Slot 5 | Slot 6 | Slot 7

125us

# FIG. 4

# FIG. 5

Long PUSCH

PDCCH

Gap

PDSCH/PUSCH

Short PUCCH

Long PUCCH

One slot

f

t

# FIG. 6

UE

BS

CORESET configuration — S502

SS configuration — S504

PDCCH generation — S506

PDCCH candidate
monitoring in the
configured SS — S508

## FIG. 7

Network-controlled repeater(NCR)

## FIG. 8

(a)                                    (b)

# FIG. 9

| Receive RRC configuration information from BS via control link | ~ S901 |

↓

| Receive side control information for controlling access link from BS via control link | ~ S903 |

↓

| Receive first signal from BS via first forwarding link | ~ S905 |

↓

| Forward first signal to UE via second forwarding link | ~ S907 |

# FIG. 10

1

# FIG. 11

First Device (100)

102 — Processor(s) (102)    Transceiver(s) (106)

Memory(s) (104)

108

208

Second Device (200)

Transceiver(s) (206)    Processor(s) (202) —202

Memory(s) (204)

# FIG. 12

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

## INTERNATIONAL SEARCH REPORT

| International application No. |
| --- |
| **PCT/KR2023/005657** |

**A. CLASSIFICATION OF SUBJECT MATTER**

**H04B 7/155**(2006.01)i; **H04W 72/23**(2023.01)i; **H04W 72/04**(2009.01)i; **H04L 5/00**(2006.01)i; **H04L 5/14**(2006.01)i; **H04B 7/08**(2006.01)i; **H04W 52/02**(2009.01)i

According to International Patent Classification (IPC) or to both national classification and IPC

**B. FIELDS SEARCHED**

Minimum documentation searched (classification system followed by classification symbols)

H04B 7/155(2006.01); H04B 7/08(2006.01); H04W 16/28(2009.01); H04W 48/10(2009.01); H04W 48/20(2009.01); H04W 56/00(2009.01); H04W 72/04(2009.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제어 링크(control link), 액세스 링크(access link), RRC(radio resource control), 사이드 제어 정보(side control information), 셀 특정 신호(cell-specific signal)

**C. DOCUMENTS CONSIDERED TO BE RELEVANT**

| Category* | Citation of document, with indication, where appropriate, of the relevant passages | Relevant to claim No. |
| --- | --- | --- |
| Y | US 2022-0053433 A1 (QUALCOMM INCORPORATED) 17 February 2022 (2022-02-17) See paragraphs [0220], [0229], [0260]-[0261], [0350], [0362], [0396], [0400], [0402] and [0434]; and figures 14 and 17. | 1-15 |
| Y | US 2021-0298069 A1 (QUALCOMM INCORPORATED) 23 September 2021 (2021-09-23) See paragraphs [0088]-[0089], [0091]-[0092] and [0102]. | 1-15 |
| A | US 2021-0306065 A1 (QUALCOMM INCORPORATED) 30 September 2021 (2021-09-30) See paragraphs [0090]-[0147]; and figures 6-8. | 1-15 |
| A | US 2021-0067237 A1 (SAMPATH, Ashwin et al.) 04 March 2021 (2021-03-04) See paragraphs [0095]-[0116]; and figures 10-14. | 1-15 |
| A | US 2021-0068050 A1 (SAMPATH, Ashwin et al.) 04 March 2021 (2021-03-04) See paragraphs [0089]-[0102]; and figures 10-12. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 July 2023** | **26 July 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| US | 2022-0053433 | A1 | 17 February 2022 | CN | 116076031 | A | 05 May 2023 |
| | | | | EP | 4197122 | A1 | 21 June 2023 |
| | | | | WO | 2022-036289 | A1 | 17 February 2022 |
| US | 2021-0298069 | A1 | 23 September 2021 | BR | 112022018375 | A2 | 08 November 2022 |
| | | | | CN | 114175521 | A | 11 March 2022 |
| | | | | CN | 115316031 | A | 08 November 2022 |
| | | | | EP | 4008063 | A1 | 08 June 2022 |
| | | | | EP | 4128970 | A1 | 08 February 2023 |
| | | | | KR | 10-2022-0157956 | A | 29 November 2022 |
| | | | | US | 2021-0036762 | A1 | 04 February 2021 |
| | | | | US | 2021-0185723 | A1 | 17 June 2021 |
| | | | | WO | 2021-022242 | A1 | 04 February 2021 |
| | | | | WO | 2021-194701 | A1 | 30 September 2021 |
| US | 2021-0306065 | A1 | 30 September 2021 | CN | 115298966 | A | 04 November 2022 |
| | | | | EP | 4128556 | A1 | 08 February 2023 |
| | | | | US | 11563482 | B2 | 24 January 2023 |
| | | | | WO | 2021-194704 | A1 | 30 September 2021 |
| US | 2021-0067237 | A1 | 04 March 2021 | CN | 114258645 | A | 29 March 2022 |
| | | | | EP | 4022989 | A1 | 06 July 2022 |
| | | | | US | 11601189 | B2 | 07 March 2023 |
| | | | | WO | 2021-041523 | A1 | 04 March 2021 |
| US | 2021-0068050 | A1 | 04 March 2021 | CN | 114258643 | A | 29 March 2022 |
| | | | | EP | 4023019 | A1 | 06 July 2022 |
| | | | | US | 11356943 | B2 | 07 June 2022 |
| | | | | WO | 2021-041527 | A1 | 04 March 2021 |